# EUROPÄISCHE PATENTSCHRIFT

(11) **EP 2 214 135 B1**
(45) Veröffentlichungstag und Bekanntmachung des Hinweises auf die Patenterteilung: **09.05.2012**
(21) Anmeldenummer: 10000931.5
(22) Anmeldetag: 29.01.2010
(51) Int. Cl.: G06T 1/20, G06T 7/00

(54) **Pipeline-Recheneinrichtung zur Verbindung von Konturelementen aus Bilddaten**
Pipeline calculation device for connecting contour elements from image data
Dispositif de calcul de pipeline destiné au raccordement d'éléments de contour à partir de données d'image

(30) Priorität: 29.01.2009 DE 102009006660
(43) Veröffentlichungstag der Anmeldung: 04.08.2010
(73) Patentinhaber: Baumer Innotec AG, 8500 Frauenfeld (CH)
(72) Erfinder: Weng, Sebastian, 01454 Radeberg (DE); Siegel, Sebastian, 01309 Dresden (DE); Franz, Martin, 01097 Dresden (DE); Noke, Stefan, 01139 Dresden (DE); Ihlefeld, Joachim, 01067 Dresden (DE)
(74) Vertreter: Strauss, Steffen

(56) Entgegenhaltungen:
- US-B1- 6 714 679
- MING XIE ET AL: "AN ALGORITHM FOR FINDING CLOSED CURVES", PATTERN RECOGNITION LETTERS, ELSEVIER, AMSTERDAM, NL, Bd. 13, Nr. 1, 1. Januar 1992 (1992-01-01) , Seiten 73-81, XP000248039, ISSN: 0167-8655, DOI: DOI:10.1016/0167-8655(92)90116-H
- STAHL J S ET AL: "Edge Grouping Combining Boundary and Region Information", IEEE TRANSACTIONS ON IMAGE PROCESSING, IEEE SERVICE CENTER, PISCATAWAY, NJ, US, Bd. 16, Nr. 10, 1. Oktober 2007 (2007-10-01), Seiten 2590-2606, XP011192116, ISSN: 1057-7149, DOI: DOI:10.1109/TIP.2007.904463

## Beschreibung

Die Erfindung betrifft allgemein die Bildverarbeitung. Insbesondere betrifft die Erfindung die Verarbeitung von Konturen in Bilddaten, wobei eine Verlinkung kurzer Konturen zu längeren Konturen erfolgt.

Es ist bekannt, mit Pipelineprozessoren in Hardware Bilddaten in Echtzeit allgemeingültig so zu verarbeiten, dass attributierte Konturelemente (Chains) mit Subpixelauflösung erzeugt werden. Ein solches Verfahren und eine entsprechende Bildverarbeitungsvorrichtung werden in der DE 10 2006 044 595 A1 offenbart.

Die Ermittlung von Konturpunkten selbst mit SubpixelAuflösung wird auch in der WO 2005/073911 A1 detailliert beschrieben.

Aufgrund der bei der Bestimmung von Konturpunktes vorgenommenen Mustervergleiche der Grauwert- oder Farbverteilungen mit in der Regel minimal 5x5 oder größeren Convolvern bleibt die Auflösung dieser Verfahren bei Beachtung des Nyquistkriteriums begrenzt. Bei Einsatz von kombinierten Verfahren, die zusätzlich hohe Kontraste auch in einer kleineren, z.B. 3x3 Umgebung verarbeiten, kann die Auflösung gesteigert werden, gleichzeitig entstehen jedoch Artefakte, die das Entstehen langer Konturen verhindern und die Ressourcen des Systems belasten.

Es ist zudem aus MING XIE ET AL: "AN ALGORITHM FOR FINDING CLOSED CURVES", PATTERN RECOGNITION LETTERS, ELSEVIER, AMSTERDAM, NL, Bd. 13, Nr. 1, 1. Januar 1992 (1992-01-01), Seiten 73-81, XP000248039, ISSN: 0167-8655, DOI: DOI:10.1016/0167-8655(92)90116-H, bekannt, mittels eines Algorithmus, der auf dem Kriterium des kleinsten Winkels beruht, kleinste geschlossene Konturelemente zu erkennen. Die Erkennung von unterbrochenen, nicht geschlossenen, Konturelementen ist hiermit indes nicht möglich.

Eine allgemeingültige automatisierte Erkennung von Objekten wird vorteilhaft über deren Konturen realisiert. Insbesondere ist dabei die Erkennung geschlossener oder näherungsweise geschlossener Konturen (Blobs) relevant, weil diese Objekte auf einfache Weise in Bildern gefunden werden und anhand der Merkmale Fläche, Umfang, Farbwerte etc. einfach klassifiziert werden können. Weitere Verfahren bestehen darin, dass lange Konturen, z.B. Linien, Kreissegmente etc. gesucht und mit Modellen verglichen werden.

Bedingt durch Störgrössen, wie etwa dem Bildrauschen weisen Konturbilder Artefakte (z.B. kurze Unterbrechungen, Verzweigungen, kleine Kreise in Konturen) auf. Es entstehen dann im Allgemeinen zunächst viele kurze Kontursegmente, die das Entstehen langer Konturen beeinträchtigen und die nicht unmittelbar erkannt werden können.

Es besteht die Aufgabe, diese Kontursegmente zu verbinden (verlinken). Dazu wird ein Graph generiert. Die Knoten des Graphen werden mit den Kontursegmenten verlinkt, ebenso die Kontursegmente mit den Knoten (Vertices) des Graphen.

In einem Bild werden bei VGA- Auflösung oft mehrere 1000 Kontursegmente gefunden, die eine Datenstruktur im MByte-Bereich benötigen. Anschließend müssen die passenden Start- und Endpunkte durch einen Sortieralgorithmus zusammengesetzt werden (Knotensuche), dann wird der Graph generiert.

Ein derartiger Algorithmus benötigt eine Rechnerarchitektur mit externem Speicher, der aufgrund seiner BUS- Breite einen hohen Energiebedarf erzeugt. Ferner wird durch den sequentiellen Sortieralgorithmus unnötig viel Rechenzeit benötigt, diese liegt auf Standard- PCs bei VGA- Auflösung im Bereich von einigen 10 bis 100ms. Für die Integration in industrietaugliche Sensoren steht demgegenüber aufgrund der Bauform für die Bildverarbeitung oft nur eine elektrische Leistung von einigen 100 Milliwatt bis Watt zur Verfügung, ferner wäre es wünschenswert, dass Konturen incl. Graph unmittelbar nach Abschluss der Bildübertragung für die weitere Verarbeitung zur Verfügung stehen, die für die Verlinkung von Chains eingesetzte Vorrichtung damit also echtzeitfähig ist.

Es besteht deshalb die technische Aufgabe, eine Recheneinrichtung zu schaffen, die die Rechenzeit gegenüber einem PC um den Faktor 10 bis 100 verkürzt und die Verlustleistung um den Faktor 10 bis 100 reduziert und die Baugröße um minimal eine Größenordnung reduziert.

Diese technische Aufgabe wird erfindungsgemäß mit einer vollständigen Hardware-Integration, insbesondere innerhalb eines Schaltkreises, wie beispielsweise einem FPGA oder Gate Array realisiert. Um diese technische Aufgabe zu lösen, werden Verfahren (Algorithmen) gegenüber dem bekannten Stand der Technik verändert, um sich im Gegensatz zu bekannten Verfahren in integrierten Schaltkreisen implementieren zu lassen.

Für eine effiziente Integration werden insbesondere globale Speicherzugriffe vermieden und Strukturen mit vorzugsweise lokalen Speichern eingesetzt. Damit geht einher, dass nur begrenztes lokales Wissen eingesetzt wird, um Chains miteinander zu verbinden.

Eine Aufgabe der Erfindung besteht nun mit anderen Worten darin, die Chains zu größeren Einheiten, beziehungsweise Konturen mit möglichst geringem Speicherbedarf und Rechenaufwand zusammenzufassen, so dass lange Kontursegmente entstehen, die direkt für die schnelle Suche von Objekten verwendet werden können. Der geringe Speicherbedarf und der geringe Rechenaufwand ermöglichen dabei die Integration des Prozesses in Form von Hardware. Eine softwarebasierte Integration auf einem speicherprogrammierbaren Rechner kann so vermieden werden.

Diese Aufgabe wird durch den Gegenstand der unabhängigen Ansprüche gelöst. Vorteilhafte Ausgestaltungen und Weiterbildungen der Erfindung sind in den abhängigen Ansprüchen angegeben.

Demgemäß sieht die Erfindung eine Pipeline-Recheneinrichtung speziell eingerichtet für dieVerbindung von Konturelementen aus Bilddaten vor, welche zumindest eine Pipelineprozessor-Einrichtung aufweist. Die Pipelineprozessor-Einrichtung ist dazu eingerichtet,
- in einem ersten Prozess eine Liste von Koordinaten der Start- und Endpunkte von Chains, die aus einer Menge von zu einer Kontur gehörenden Konturpunkten in geordneter Reihenfolge bestehen, zu erzeugen und in einem Speicher abzulegen,
- und in einem zweiten Prozess für jeden Start- und Endpunkt die Liste der Koordinaten der Start- und Endpunkte nach dem letzten Auftreten derselben Koordinaten oder innerhalb einer Umgebung vorbestimmter Grösse liegenden Koordinaten zu durchsuchen,
- und in einem dritten Prozess jedem Start- oder Endpunkt einen Vertex-Index und einen Instanz-Index zuweist, wobei der Vertex-Index einen fortlaufenden Index der Vertices darstellt und der Instanz-Index ein fortlaufender Index der zu einem Vertex gehörenden Start- und Endpunkte ist, wobei zusammengehörige Punkte aus der Menge der Anfangs- und Endpunkte denselben Vertex-Index erhalten und wobei zusammengehörige Punkte solche Punkte aus der Menge der Anfangs- und Endpunkte sind, welche dieselben Koordinaten oder Koordinaten aufweisen, die innerhalb der Umgebung vorbestimmter Grösse liegen. Die Erfindung betrifft außerdem ein Verfahren zur Verbindung von Konturelementen aus Bilddaten, mit welchem -vorzugsweise auf einer Pipeline-Recheneinrichtung- eine Verarbeitung der Chains mittels der oben beschriebenen drei Prozesse durchgeführt wird.

Bei diesen Prozessen bezeichnet der Begriff einer "Chain" eine Menge von zu einer Kontur gehörenden Konturpunkten in geordneter Reihenfolge. Eine geordnete Reihenfolge bedeutet dabei, dass bei einer Darstellung der Chain als Liste der zu einem Listeneintrag eines Konturpunkts die zu diesem Konturpunkt benachbarten Konturpunkte im vorhergehenden und nachfolgenden Listeneintrag eingetragen sind.

Die Chains selber können von einer externen Bildverarbeitungsvorrichtung erzeugt werden. Gemäß einer Weiterbildung der Erfindung ist aber auch die Erzeugung von Chains in Form geordneter Listendaten der zu einer Kontur gehörenden Konturpunkte in Form einer Pipeline-Recheneinrichtung in die erfindungsgemäße Vorrichtung integriert. Demgemäß ist nach dieser Weiterbildung der Erfindung eine der Recheneinrichtung des ersten Prozesses vorgeordnete Pipeline-Recheneinrichtung als Bestandteil der erfindungsgemäße Pipeline-Anordnung vorgesehen, wobei diese vorgeordnete Pipeline-Recheneinrichtung eingerichtet ist, aus Bilddaten Konturpunkte zu ermitteln und die zu einer Kontur gehörenden Konturpunkte als Chains in Form von Listendaten auszugeben, in welchen die Konturpunkte in geordneter Reihenfolge entsprechend ihrer Abfolge entlang der Kontur gelistet sind.

Ein Vertex bezeichnet einen Knoten bei welchem eine oder mehrere Chains gemeinsame oder innerhalb einer vorbestimmten Umgebung nahe beieinander liegende Start- oder Endpunkte haben.

Mit Beendigung des dritten Prozesses liegt nun bereits eine Liste vor, in welcher logische Verknüpfungen der kürzeren Chains zu längeren Einheiten aus zusammengehörenden Chains abgelegt sind. Die Prozesse, wie sie oben beschrieben sind, zeichnen sich dadurch aus, dass sie mit geringem Speicheraufwand als Pipeline-Prozess durchgeführt werden können, was erst die Implementierung in einer Pipeline-Architektur ermöglicht. Es ist dabei sinnvoll, den ersten, zweiten und dritten Prozess zwar zeitlich versetzt die jeweiligen Daten verarbeiten zu lassen, allerdings fortlaufend zeitlich parallel auszuführen. Die Verwendung einer Pipeline-Recheneinrichtung bringt daher besondere Vorteile, da derartige Recheneinrichtungen sehr hohe Datenverarbeitungsraten zur Verfügung stellen und somit unter anderem im allgemeinen eine Datenverarbeitung von Videobilddaten in Echtzeit ermöglichen. Da die Pipeline-Verarbeitung fortlaufend durchgeführt werden kann, ist in Weiterbildung der Erfindung vorgesehen, dass fortlaufend Chains dem ersten Prozess zugeführt werden und der erste, zweite und dritte Prozess gleichzeitig ablaufen. Da die Prozesse aufeinander aufbauen, werden die Prozesse dabei aber nacheinander gestartet. Selbstverständlich ist es aber auch möglich, die Prozesse auf einer andersartigen Rechnerarchitektur, beispielsweise auf einem Desktop-Rechner zu implementieren oder auf nicht fortlaufend erzeugte Daten von Chains anzuwenden.

Die Pipeline-Recheneinrichtung wird besonders bevorzugt unter Verwendung eines oder mehrerer FGGA- oder ASIC-Bausteinen zusammengesetzt. Die Prozesse werden demnach hardwaremäßig in die Bausteine einprogrammiert. Da die erfingungsgemäße Kontur-, beziehungsweise Chain-Verarbeitung nur wenige, einfache Rechenschritte erfordert, ist eine einfache Implementierung auf FPGA- oder ASIC-Bausteinen möglich. Eine Abarbeitung der Prozesse auf solchen Prozessoren bietet zumindest derzeit ein Mehrfaches an Rechengeschwindigkeit gegenüber einem speicherprogrammierbaren Prozessor und ermöglicht eine kompakte und kostengünstige Bauform.

Nach den drei Prozessen werden zwar logische Verknüpfungen der Chains geschaffen, allerdings ist die Information noch über die Liste verteilt vorhanden. Es bietet sich daher vorteilhaft an, die Daten noch weiter zu sortieren und eine Datenstruktur zu schaffen, in welcher direkt die zusammengehörenden Chains und deren Verbindungen ablesbar sind. Dazu ist in Weiterbildung der Erfindung die Pipeline-Recheneinrichtung dazu eingerichtet, in einem vierten Prozess die Vertex- und Instanz-Indizes von jeweils zwei bezüglich der Enden einer Chain in Opposition stehenden Start- und Endpunkte in eine Vertex-Struktur zusammen mit einem Index der verbindenden Chain einzutragen. Die Vertex-Struktur stellt ihrerseits wiederum eine Liste dar, die in einem Speicher abgelegt wird. Der Eintrag der in Opposition stehenden Start- oder Endpunkte in diese Liste wird nachfolgend auch inverse Verlinkung genannt. Anhand der inversen Verlinkung kann nun in der Liste, beziehungsweise Vertex-Struktur unmittelbar abgelesen werden, welche Vertices -einer oder mehrere, je nach Verlauf der Konturen des Bildes- mit einem bestimmten Vertex in Verbindung stehen.

Diese inverse Verlinkung kann in einfacher und schneller Weise unter Einsatz eines Doppelregisters erfolgen. Dazu ist in Weiterbildung der Erfindung vorgesehen, dass die Pipeline-Recheneinrichtung im dritten Prozess in das Doppelregister zu einem Start- oder Endpunkt einer mit einem Vertex verbundenen Chain Information, welche eine Vertex-Instanz, die Koordinaten, eine Segmentnummer, den Vertex-Index des Start- oder Endpunktes und weitere Attribute umfassen, zum zugehörigen, in Opposition stehenden End- oder Startpunkt der Chain einträgt. Dabei wird ein Punkt, beziehungsweise dessen Information in ein Teilregister des Doppelregisters eingetragen und der zugehörige, in Opposition stehende, beziehungsweise am anderen Ende der Chain angeordnete Punkt gesucht und in das andere Teilregister eingetragen. Durch Auslesen des Doppelregisters werden dann zugehörige Start- und Enpunkte mit ihren zugehörigen Vertex-Indizes zusammengefasst.

Um die Vertex-Struktur zu erstellen, kann der vierte Prozess durch einen optimierten Schreibvorgang für die Vertex-Struktur weitergebildet werden. Bei diesem Schreibvorgang werden zunächst zumindest einige, vorzugsweise alle Informationen für einen Vertex durch einen Suchprozess zusammengetragen und in einem Registersatz zwischengespeichert, bevor der Vertex in die Vertex-Struktur eingetragen wird. Außerdem werden Informationen aus der Menge der zu einem Vertex verbundenen Chains extrahiert und gespeichert.

Mit der Vertex-Struktur können dann auch aus der Menge von in Echtzeit anfallenden Chains Artefakte herausgefiltert werden. Die Vertex-Struktur erweist sich als besonders günstig, um die Morphologie der Konturen auf Artefakte prüfen zu können und derartige Artefakte zu beseitigen.

Eine Art von häufig auftretenden Artefakten sind kleine Kreise. Ein Kreis in einem Graphen bezeichnet eine Folge von Knoten (Vertices) Kᵢ mit der Eigenschaft, dass die aufeinanderfolgenden Knoten Kᵢ und Kᵢ₊₁ mit einer Kante (Chain) verbunden sind, die Start- und Endknoten identisch und alle anderen Knoten paarweise disjunkt sind. Bei einem solchen Kreis können entweder Start- und Endpunkt identisch sein, oder ein Kreis kann sich aus zwei kurzen Chains zusammensetzen, die gemeinsame Start- und Endpunkte aufweisen. Um derartige Kreise auszufiltern, ist die Pipeline-Recheneinrichtung in Weiterbildung der Erfindung dazu eingerichtet, im vierten Prozess Informationen aus der Menge der zu einem Vertex verbundenen Chains in Form der Länge der Chains und deren in Opposition zum Vertex stehenden Start- oder Endpunkte der Chains in der Vertex-Struktur zu speichern, wobei die Pipeline-Recheneinrichtung außerdem eingerichtet ist,
für jeden Vertex zu prüfen, ob dessen Vertex-Index identisch zum Vertex-Index des in Opposition stehenden Start- oder Endpunktes ist und die Länge der zugehörigen Chain unterhalb eines vorbestimmten Werts liegt, wobei im Falle, dass diese Bedingungen erfüllt sind, ein Rang des Vertex doppelt dekrementiert wird, und ein Listeneintrag der Verbindung mit identischem Vertexindex und Vertex-Index des in Opposition stehenden Start- oder Endpunktes gelöscht wird.

Bei dieser Weiterbildung der Erfindung werden also Kreise eliminiert, die einen gemeinsamen Start- und Endpunkt haben. Da von diesem Punkt der Kreis vom Vertex aus in zwei verschiedenen Richtungen -im oder gegen den Uhrzeigersinndurchlaufen werden kann, erhöht ein solcher Kreis den Rang des zugehörigen Vertex um zwei. Daher wird der Rang beim Ausfiltern des Kreises doppelt dekrementiert.

Gemäß einer weiteren, alternativen oder insbesondere zusätzlichen Weiterbildung der Erfindung ist die Pipeline-Recheneinrichtung ebenfalls eingerichtet, im vierten Prozess Informationen aus der Menge der zu einem Vertex verbundenen Chains in Form der Länge der Chains und deren in Opposition zum Vertex stehenden Start- oder Endpunkte der Chains in der Vertex-Struktur zu speichern. Außerdem ist die Pipeline-Recheneinrichtung dazu eingerichtet, für jeden Vertex zu prüfen, ob mindestens zwei der zu einem Vertex gehörenden Verbindungen den gleichen Vertex-Index des in Opposition stehenden Start- oder Endpunktes aufweisen oder ob zu dem in Opposition stehende Vertex eine weitere Verbindung existiert, deren Vertex-Index mit dem in Opposition stehenden Vertex-Index identisch und die Länge der zu den Verbindungen korrespondierenden Chains kürzer als ein vorgegebener Wert ist. Im Falle, dass diese Bedingungen zutreffen, wird einer der beiden Listeneinträge der Verbindungen gelöscht oder es werden beide Einträge gelöscht und eine neue Verbindung erzeugt und eingetragen wird. In beiden Fällen wird der Rang des Vertex einfach dekrementiert.

Bei dieser Weiterbildung der Erfindung werden Kreise, welche sich aus zwei kurzen Chains zusammensetzen, die gemeinsame Start- und Endpunkte aufweisen, erkannt und jeweils durch eine einfache Strecke ersetzt, welche die gemeinsamen Start- und Endpunkte verbindet. Da in diesem Fall nur eine von zwei von einem Vertex ausgehenden Verbindungen gelöscht oder die Verbindungen durch eine einfache Verbindung ersetzt werden, wird folglich der Rang des Vertex nur um eins dekrementiert.

Eine für die erindungsgemäße Art der Datenverarbeitung besonder effektive Pipeline-Architektur lässt sich verwirklichen, indem die Pipeline-Recheneinrichtung mit zwei unabhängigen Dualport-RAM-Speichern ausgestattet wird, wobei die Pipeline-Recheneinrichtung außerdem eingerichtet ist,
- die im ersten Prozess erzeugte Liste von Koordinaten der Start- und Endpunkte von Chains in einem ersten Dualport-RAM-Speicher zu speichern und
- im dritten Prozess eine Liste mit Vertex-Indices und Instanz-Indices im zweiten Dualport-RAM-Speicher abzuspeichern.

Dies ermöglicht unter anderem eine gleichzeitige Sortierung der Daten und die Verbindung von Chains zu längeren zusammengehörenden Einheiten einerseits durch Sortieren der Daten im ersten Speicher, als auch eine gleichzeitige Filterung von Artefakten durch Auswertung des Inhalts des zweiten Speichers, beispielsweise eine wie vorstehend beschriebene Eliminierung kleiner Kreise.

Weiterhin ist es vorteilhaft, wenn die Pipeline-Recheneinrichtung der im ersten Prozess erzeugten Liste von Koordinaten der Start- und Endpunkte zusätzlich eine Statusinformation hinzufügt, welche die Start- und Endpunkte als im zweiten Prozess noch nicht bearbeitet markiert, und wobei im zweiten Prozess ein Zeiger auf die Listeneinträge inkrementiert wird, bis ein als noch nicht bearbeitet markierter Start- oder Endpunkt erreicht wird, und wobei die Koordinaten dieses Punktes dann in einem Register gespeichert werden, und die Liste dann nach mit diesem Punkt zusammengehörendenPunkten durchsucht wird, wobei die im Register gespeicherten Koordinaten mit den Koordinaten der Start- und Endpunkte der Liste verglichen werden. Ein derartiges Vorgehen ist günstig, um sicherzustellen, dass alle Start- und Endpunkte auch bearbeitet werden. Die Markierung kann beispielsweise durch ein Maskenbit erfolgen.

Erfindungsgemäß wird vorzugsweise auch tatsächlich unterschieden, ob es sich um einen Start- oder Endpunkt handelt. Diese Unterscheidung kann beispielsweise bereits bei den in den ersten Prozess einlaufenden Daten der Chains von einer vorgeordneten Recheneinrichtung der erfindungsgemäßen Pipeline-Recheneinrichtung getroffen worden sein. An sich erscheint eine solche Unterscheidung zunächst unnötig, da es keine ausgezeichnete Richtung einer Chain gibt. Gemäß einer Weiterbildung der Erfindung wird daher -vorzugsweise vor dem ersten Prozess- zumindest ein Bit gesetzt, welches angibt, ob es sich bei den Randpunkten einer Chain um einen Start- oder Endpunkt einer Chain handelt. Da die Unterscheidung zwischen Start- und Endpunkt zunächst an sich willkürlich ist, können die Start- und Endpunkte auch allgemein als Endpunkt eines ersten Typs und Endpunkt eines zweiten Typs bezeichnet werden.

Letztendlich stellt eine Chain eine Kontur oder einen Teil einer Kontur dar, die in beiden Richtungen durchlaufen werden kann. Die Unterscheidung ist aber sinnvoll, da damit sehr effektiv eine Durchsuchung der Daten nach in Opposition stehenden Punkten einer Chain erfolgen kann. Wird beispielsweise der zugehörige Endpunkt einer Chain gesucht, ist bereits klar, dass keiner der Startpunkte in Frage kommt, da jede Chain nur einen Start- und einen Endpunkt aufweist.

In Weiterbildung der Erfindung ist die Pipeline-Recheneinrichtung daher dazu eingerichtet, zumindest ein Bit für die Unterscheidung eines Start- von einem Endpunkt zuzuweisen und abzuspeichern. Die Willkürlichkeit der Zuweisung kann aber vorteilhaft dadurch aufgehoben werden, indem die Zuordnung als Start- oder Endpunkt einer Chain nach vorgegebenen Regeln erfolgt. So kann die Zuordnung zum Beispiel vorteilhaft anhand des Verlaufs des Farbwerts oder eines anderen Attributs erfolgen. Der Farbwert-Verlauf gibt eine Richtung quer zum Verlauf der Chain, beziehungsweise der Kontur vor. Unter Zuhilfenahme dieser Richtung kann eine Attibutierung dann eindeutig so erfolgen, dass die Richtung des Farbverlaufs und die Richtung entlang der Kontur von Start- zu Endpunkt entweder immer rechts- oder immer linkshändig zueinander stehen. Auf diese Weise enthält das Attribut eines Start- oder Endpunkts vorteilhaft eine zusätzliche Information des zugrundeliegenden Bildes. Eine weitere, sehr einfache Möglichkeit der Zuweisung besteht darin, die Attribute Start- und Endpunkt einfach anhand der Reihenfolge der Listendaten der Chains vorzunehmen.

Die Erfindung wird nachfolgend anhand von Ausführungsbeispielen und unter Bezugnahme auf die beigeschlossenen Figuren näher erläutert. Dabei verweisen gleiche Bezugszeichen auf gleiche oder ähnliche Elemente.

Es zeigen:
- Fig. 1: eine Chain dargestellt als Abfolge von Konturpunkten und repräsentiert als Datenstruktur,
- Fig. 2A: eine Vertexstruktur,
- Fig. 2B: verschiedene Chains, welche Bestandteile der in Fig. 2A dargestellten Vertexstruktur sind,
- Fig. 3A: eine Chainliste,
- Fig. 3B: eine aus der Chainliste 104 erzeugte komprimierte Liste mit einem Index der Chains und einer zusätzlichen Bit-Information für den Start und das Ende der Chains,
- Fig. 3C: eine aus der in Fig. 3B dargestellten Liste erzeugte weitere Liste 109, welche einen Vertex- Index und einen Instanz-Index von Vertizes der in Fig. 2A dargestellten Vertexstruktur enthält,
- Fig. 4: eine Darstellung einer aus der in Fig. 3C dargestellten Liste erzeugten Vertex-Struktur in Listenform,
- Fig. 5A: und 5B zwei Graphstrukturen mit kleinen Kreisen,
- Fig. 6: ein Schaltbild einer Pipeline-Recheneinrichtung
- Fig. 7A: ein Bild eines Anwendungsbeispiels in einem industriellen Prozess,
- Fig. 7B: ein Ausschnitt des in Fig. 7A gezeigten Bildes,
- Fig. 8A: ein weiteres Bild eines Anwendungsbeispiels in einem industriellen Prozess und
- Fig. 8B: ein Ausschnitt des in Fig. 8A gezeigten Bildes.

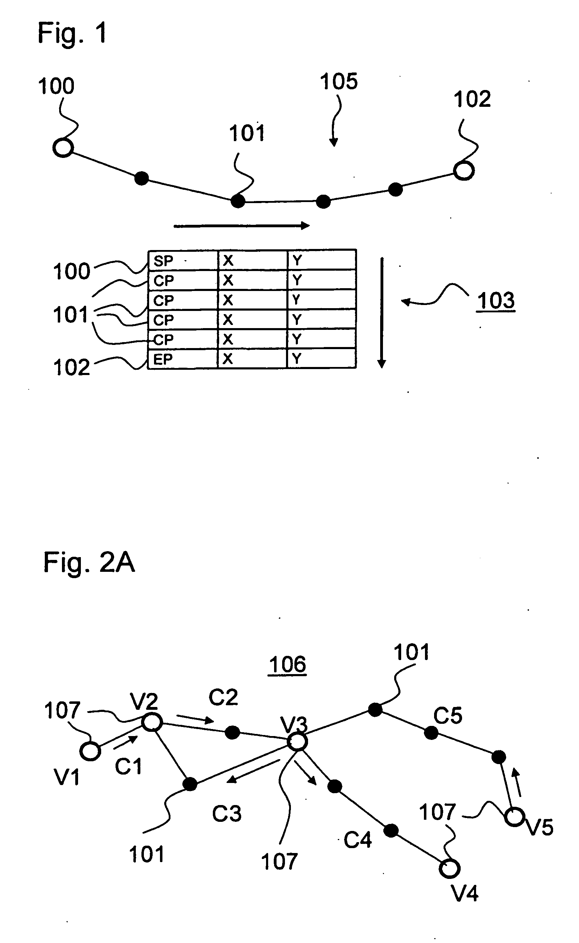

Gemäß einem Ausführungsbeispiel der Erfindung werden mit einem oder mehreren Pipelineprozessoren in Hardware zunächst Bilddaten in Echtzeit allgemeingültig so verarbeitet, dass attributierte Konturelemente (Chains) mit Subpixelauflösung erzeugt werden. Ein Konturelement, beziehungsweise eine Chain 105 ist in Fig. 1 dargestellt und ist in diesem Zusammenhang die Verbindung eines Startpunktes (SP) 100 über eine Reihe von Konturpunkten (CP) 101 mit einem Endpunkt (EP) 102 und wird von der Pipeline-Architektur als geordnete Sequenz 103 der Koordinaten der beteiligten Punkte 100, 101, 102 in einem Speicher abgespeichert.

Für die Objekterkennung wird allgemein nun eine in beiden Abtastrichtungen der Konturelemente verlinkte Struktur erzeugt, die als konkatinierte Konturpunktliste bezeichnet wird, ferner sind benachbarte Konturelemente konkatiniert über Knoten, beziehungsweise Vertices zu einem Graphen zu verbinden. Diese Aufgaben erfordern insbesondere bei feiner Konturauflösung für allgemeine Bilder eine hohe Rechenleistung, die durch einen effizienten Pipelineprozessor bereitgestellt werden soll.

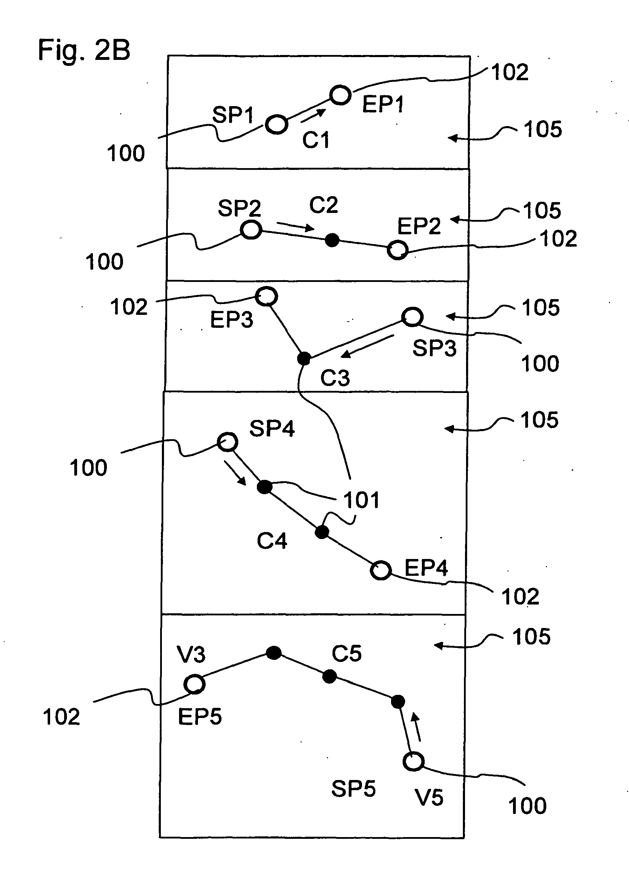

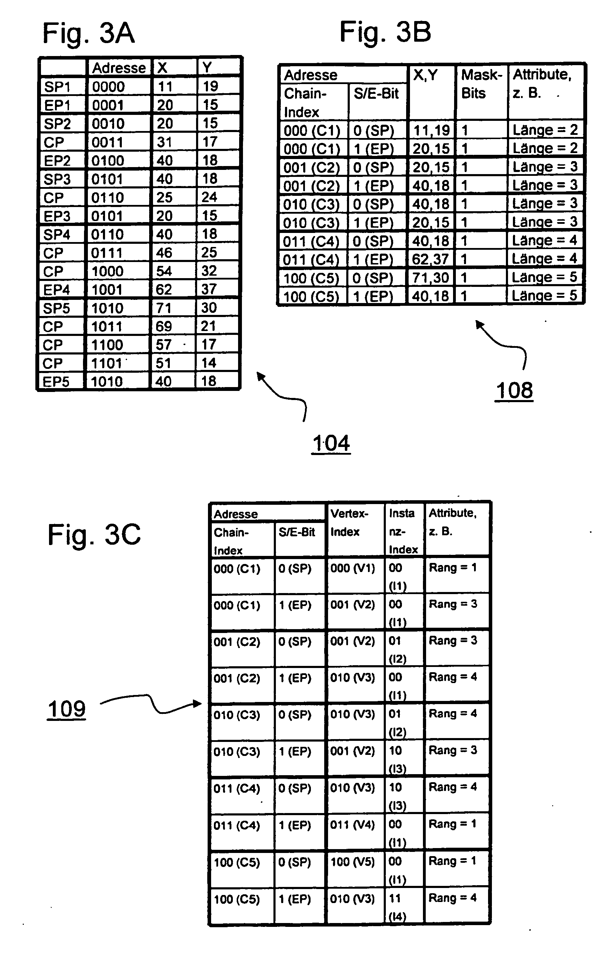

Die Bildung einer solchen Struktur wird anhand der Fig. 2A, 2B und Fig. 3A bis 3C näher erläutert.

Bei der Chaingenerierung treten Artefakte durch Rauschen oder durch Digitalisierungseffekte bei Verwendung größerer Convolverkerne auf, die das Entstehen langer Konturen verhindern und die Ressourcen des Systems durch eine unnötig hohe Anzahl kleiner Konturelemente belasten. Ebenso erzwingen Verzweigungspunkte der Konturen das Beenden bzw. Beginnen einer oder mehrerer Chains, da an diesen Punkten eine Chain nicht eindeutig fortgesetzt werden kann.

Aufgrund des sequenziellen Charakters der Pipelinestruktur und der pseudozufälligen Reihenfolge, in der die Chains generiert werden, können im Bild zusammenhängende Konturen im Chainspeicher über mehrere Speicherbereiche verteilt sein - jeweils durch die Daten anderer Chains voneinander getrennt. Dadurch wird ein Verfolgen langer zusammenhängender Konturen erschwert.

Um eine effiziente Struktur für die Analyse langer Chains zu erhalten, soll in einem weiterführenden Pipelineprozess eine höher geordnete Graphstruktur 106, wie sie in Fig. 2A dargestellt ist, erzeugt werden. Die in Fig. 2A gezeigten Vertexstruktur hat als Bestandteile die in Fig. 2B dargestellten Chains 105 mit Startpunkten 100, Endpunkten 102 und -je nach Länge der Chain- gegebenenfalls einen oder mehrere weitere Konturpunkte 101. Die Vertizes 107 der in Fig. 2A gezeigten Struktur sind zusätzlich mit einem Index V1, V2, .... indiziert. Ebenso sind die Start- und Endpunkte 100, 102 mit Indizes SP1, SP2, ..., SP5, beziehungsweise EP1, EP2, ..., EP5 gekennzeichnet. Die Chains 105 sind mit Indizes C1, C2, ..., C5 durchnummeriert. Auch die zugehörige, durch das erfindungsgemäße Verfahren als Liste im Speicher erzeugte Vertexstruktur enthält solche Indizes für die Vertizes und die Start- und Endpunkte und/oder die Chains, beispielsweise in Form fortlaufender Nummern.

Zur Erzeugung der Graphstruktur 106 wird eine Liste mit attributierten Start- und Endpunkten generiert, die die Verbindungsinformation zwischen den Chains bereitstellt.

Diese Information kann dann in Folgeprozessen dazu verwendet werden, um Artefakte bzw. nicht relevante Strukturen aus den detektierten Konturen (z.B. kurze, nicht zusammenhängende Konturen mit niedrigem Kontrast) aus den relevanten Daten herauszufiltern und so eine Echtzeiterkennung von Objekten in den Bilddaten zu ermöglichen. Aus der gefilterten Liste der Start- und Endpunkte werden dann die Knoten (Vertices 107) eines bereinigten Graphen erzeugt.

Das Verfahren dazu, welches anhand der beispielhaften Listen der Fig. 3A bis 3C nachfolgend erläutert wird, basiert darauf, dass
- in einem ersten Prozess eine Liste von Koordinaten der Start- und Endpunkte von Chains zu erzeugen und in einem Speicher abzulegen,
- und in einem zweiten Prozess für jeden Start- und Endpunkt die Liste der Koordinaten der Start- und Endpunkte nach dem letzten Auftreten derselben Koordinaten oder innerhalb einer Umgebung vorbestimmter Grösse liegenden Koordinaten zu durchsuchen,
- und in einem dritten Prozess abhängig vom Sucherfolg des zweiten Prozesses jedem Start- oder Endpunkt einen Vertex-Index und einen Instanz-Index zuweist, wobei der Vertex-Index einen fortlaufenden Index der Vertices darstellt und der Instanz-Index ein fortlaufender Index der zu einem Vertex gehörenden Start- und Endpunkte ist, wobei zusammengehörige Punkte aus der Menge der Anfangs- und Endpunkte denselben Vertex-Index erhalten und wobei zusammengehörige Punkte solche Punkte aus der Menge der Anfangs- und Endpunkte sind, welche dieselben Koordinaten oder Koordinaten aufweisen, die innerhalb der Umgebung vorbestimmter Grösse liegen.

Hierzu werden in einem ersten Prozess, in einer als Datenstrom vorliegenden, eingehenden Chainliste 104, wie sie beispielhaft Fig. 3A zeigt, Start- und Endpunkte markiert und in einer komprimierten Liste gespeichert. Eine solche, aus den Daten der Liste 104 hervorgegangene komprimierte Liste 108 zeigt Fig. 3B. Die Einträge dieser Liste werden dabei durch den Index der Chain und einer zusätzlichen Bit-Information für den Start und das Ende der Chain (2. Spalte der Liste) adressiert. Liste 108 kann durch weitere Attribute wie z. B. die Länge (Anzahl der Konturpunkte) oder den Kontrast der Chains erweitert werden, um in einer späteren Verarbeitung die resultierenden Konturdaten nach diesen Kriterien zu filtern, ferner werden Statusinformationen zur Steuerung der weiteren Prozesse eingeführt (Mask-Bits). Beispielsweise wird jeder Eintrag der Liste als "unbearbeitet" markiert. Dazu ist bei dem in Fig. 3B gezeigten Beispiel ein Mask-Bit (4. Spalte) auf den Wert eins gesetzt.

In einem zweiten Prozess werden dann in Liste 108 Tupel zusammenhängender Start- bzw. Endpunkte gesucht. Derartige Punkte sind dann zusammenhängend, wenn der Euklidische Abstand zwischen ihnen null ist (Typ 0) oder nicht null ist und ein Maß ε nicht übersteigt (Typ 1). Ein Tupel besteht dabei aus einem Referenzpunkt und seinen Nachbarn. Die Punkte eines und desselben Tupels werden durch einen Zähler (Instanz-Index) unterschieden. Die Tupel werden fortlaufend durch einen Zähler (Vertex-Index) indiziert. Nach erfolgter Verarbeitung wird aus jedem Tupel ein Vertex eines Graphen gebildet.

Zu Beginn des zweiten Prozesses wird vorteilhaft zunächst der nächste gültige Referenzpunkt bestimmt. Hierzu kann in einfacher Weise ein Pointer so lange inkrementiert werden, bis ein neuer Start- oder Endpunkt gefunden wurde, der noch nicht einem Tupel zugeordnet wurde und somit als "unbearbeitet" gekennzeichnet ist. Diesem Referenzpunkt wird der Instanz-Index null zugewiesen und er wird in einem Register gespeichert.

Anschließend wird die Liste 108 nach mit dem Referenzpunkt zusammenhängenden Start- oder Endpunkten durchsucht. Die zusammenhängenden Punkte des Tupels werden in einem aus mehreren Registern bestehenden Registersatz zwischengespeichert, zusätzlich werden ein fortlaufender Instanz-Index sowie der Typ der Verbindung gespeichert. Alle Punkte des Tupels werden in Liste 108 als "bearbeitet" gekennzeichnet. Dazu kann in einfacher Weise das Mask-Bit umgeschaltet werden.

Nachdem die Liste 108 durchsucht wurde, befindet sich im Registersatz ein vollständiges Tupel, das dem nachfolgend beschriebenen dritten Prozess zugeführt wird. Anschließend beginnt der Prozess zwei erneut.

In einem dritten Prozess wird Schritt für Schritt der jeweilige Inhalt des Registersatzes aus dem zweiten Prozess in eine in Fig. 3C als Beispiel dargestellte Liste 109 eingetragen. Es werden der Vertex-Index, der Instanz-Index, sowie Attribute (Verbindungstyp, Rang und bei Bedarf weitere Parameter) gespeichert. Da die Vertizes und deren Zusammenhang in der Liste abgespeichert sind, stellt diese Liste einen Zusammenhang zwischen den kürzeren Chains dar, die damit zu größeren zusammenhängenden Kontursegmenten logisch verknüpft sind und als Listendaten die in Fig. 2A dargestellte Graphstruktur 106 repräsentieren.

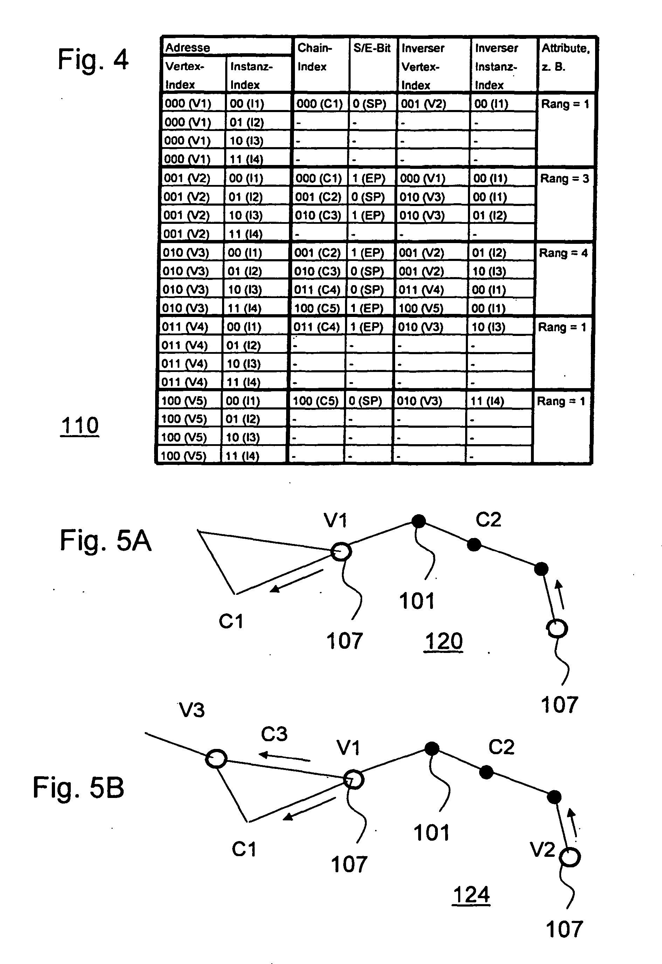

Um die Daten effektiver bearbeiten zu können, werden dann in einem vierten Prozess die Informationen aus Liste 109 ausgelesen und in einer über den Vertex-Index und den Instanz-Index direkt adressierbaren Vertex-Struktur gemäß der in Fig. 4 dargestellten Liste 110 in einem nicht gezeigten dritten Speicher, z.B. im Hauptspeicher eines digitalen Signalprozessors, gespeichert. Hierzu wird der zweite Speicher kontinuierlich mit aufsteigender Adresse ausgelesen, so dass die dem Start- und Endpunkt einer Chain zuzuordnenden Links zu den Vertices aufeinander folgend am Ausgang des zweiten Speichers erscheinen.

Es sei Pi eine Adresse in Liste 109, von der Informationen ausgelesen werden. Der unter Pi eingetragene Vertex-Index in Kombination mit dem dazugehörigen Instanz-Index bestimmt die Adresse der Vertex-Struktur (Liste 110), an die geschrieben wird. An dieser Adresse werden folgende Einträge geschrieben: Chain-Index sowie Start-/ Ende-Bit zur Unterscheidung, ob es sich um einen Start- oder Endpunkt handelt (Spalten Chain-Index sowie S/E-Bit), Vertex- sowie Instanz-Index des in Opposition stehenden Start- oder Endpunktes (Spalten Inverser Vertex-Index sowie Inverser Instanz-Index).

Ist das Start-/Ende-Bit von Pi gesetzt, so stehen die Informationen des in Opposition stehenden Start- oder Endpunktes an Adresse Pi-1, anderenfalls stehen sie an der Adresse Pi+1. Weiterhin werden für jeden Vertex Attribute (z. B. Rang) gespeichert, die ggf. durch zusätzliche Attribute der einzelnen Instanzen des Vertex (z. B. Verbindungstyp, Länge) erweitert werden können.

Die so entstehende Liste 110 erhält die Informationen der gesuchten Graphstruktur 106 in geordneter Reihenfolge. Für einen Vertex 107 lässt sich die Anzahl der genutzten Verbindungen zu anderen Vertices 107 ablesen und als zusätzliches Attribut Rang abspeichern. Im Beispiel wird davon ausgegangen, dass für jeden Vertex 107 maximal vier Instanzen auftreten können. Struktur 110 sieht daher pro Vertex vorzugsweise nur vier Einträge vor. Jede Verbindung ist durch eine Chain (Spalte Chain-Index) und einen verbundenen Vertex (Spalte Inverser Vertex-Index) gekennzeichnet. Die Spalte Inverser Vertex-Index dient dazu, den Graphen effektiv durchlaufen zu können, da mit ihrer Hilfe sichtbar gemacht wird, über welche Verbindung ein Vertex 107 erreicht worden ist.

Nachfolgend wird die Funktion eines Chainfilters als vorteilhafter Bestandteil der erfindungsgemäßen Pipeline-Recheneinrichtung erläutert.

Dieser Filter basiert darauf, dass die im vierten Prozess in der die Vertex-Struktur repräsentierenden Liste 110 gespeicherte Informationen aus der Menge der zu einem Vertex 107 verbundenen Chains in Form der Länge der Chains und deren in Opposition zum Vertex stehenden Start- oder Endpunkte der Chains in der Vertex-Struktur gespeichert wurden. Es wird für jeden Vertex geprüft, ob dessen Vertex-Index identisch zum Vertex-Index des in Opposition stehenden Start- oder Endpunktes ist und die Länge der zugehörigen Chain unterhalb eines vorbestimmten Werts liegt, wobei im Falle, dass diese Bedingungen erfüllt sind, der Rang des Vertex doppelt dekrementiert wird, und der Listeneintrag der Verbindung mit identischem Vertexindex und Vertex-Index des in Opposition stehenden Start- oder Endpunktes gelöscht wird.

Ebenfalls wird für jeden Vertex geprüft, ob mindestens zwei der zu einem Vertex gehörenden Verbindungen den gleichen Vertex-Index des in Opposition stehenden Start- oder Endpunktes aufweisen oder ob zu dem in Opposition stehende Vertex eine weitere Verbindung existiert, deren Vertex-Index mit dem in Opposition stehenden Vertex-Index identisch und die Länge der zu den Verbindungen korrespondierenden Chains kürzer als ein vorgegebener Wert ist, wobei im Falle, dass diese Bedingungen zutreffen, einer der beiden Listeneinträge der Verbindungen gelöscht oder beide Einträge gelöscht und eine neue Verbindung erzeugt und eingetragen wird, wobei in beiden Fällen der Rang des Vertex einfach dekrementiert wird.

Damit werden Artefakte in Form kleiner Kreise erkannt und die Graphstruktur unter Eliminierung solcher Kreise korrigiert. Es kommen zwei Formen kleiner Kreise in Frage:
a) kleine Kreise im Graphen, die nur aus einem Chain bestehen. Ein solcher kleiner Kreisel ist in Fig. 5A als Bestandteil der beispielhaften Graphstruktur 120 dargestellt. Die mit C1 bezeichnete Chain ist kurz und läuft zum selben Punkt zurück. Start- und Endpunkt sind mithin entweder identisch oder so nahe zusammen, dass sie demselben Vertex 107 zugeordnet sind.
b) kleine Kreise, die aus zwei Chains bestehen. Ein solcher kleiner Kreisel ist in Fig. 5B als Bestandteil der beispielhaften Graphstruktur 124 dargestellt. Die Chains C1 und C3 sind kurz und haben Start- und Endpunkte, die denselben Vertizes 107 zugeordnet sind.

Das Attribut "klein" bezieht sich auf die Anzahl der Konturpunkte der Chains, die den Kreis bilden und/oder der geometrischen Länge der betreffenden Chain. Um zu entscheiden, ob es sich bei Kreisen um kleine Kreise handelt, kann die Information verwendet werden, ob die Länge einer Chain kleiner als eine vorgebende Schwelle ist. Diese Information kann in Form eines Status-Bits für jede der maximal 4 zu einem Vertex gehörigen Verbindungen in der Vertex-Liste mit gespeichert werden. Diese Status-Bits werden beim Erzeugen der Vertex-Struktur aus der in Liste 108 gespeicherten Chainlänge berechnet.

Um kleine Kreise gemäß Fall a) zu detektieren, wird die Vertex-Struktur entsprechend der in Fig. 4 gezeigten Liste 110 gescannt. Dabei wird einerseits kontrolliert, ob der Vertex-Index und der inverse Vertex-Index identisch sind. Andererseits wird geprüft, ob die Länge einer Chain kleiner als eine vorgebende Schwelle ist, indem das Status-Bit ausgewertet wird. Ist beides erfüllt, so wird der Eintrag aus der Vertex-Struktur entfernt und der Rang vom aktuellen Vertex um zwei dekrementiert. In diesem Fall existiert noch ein zweiter Eintrag mit dem gleichen Chain, dieser wird auch gelöscht. Die verbleibenden Einträge des Vertex in Liste 110 werden nach oben verschoben. Weiterhin wird die Chain in Liste 104 als gelöscht markiert. Um die Daten derartig verarbeiten zu können, ist ein Random-Acess-Zugriff sinnvoll. Es ist daher günstig entsprechenden Speicher vorzusehen. Wird in einem fortlaufenden Prozess gleichzeitig die Liste 110 erzeugt, bietet sich insbesondere Dual-Port-RAM als Speicher an.

Um kleine Kreise gemäß Fall b) zu erkennen, werden für jeden Vertex 107 ebenfalls die Verbindungen gescannt. Ein Kreis wurde erkannt, wenn
i) mindestens zwei der Verbindungen den gleichen inversen Vertex-Index haben und die Auswertung der Status-Bits beider Verbindungen zeigt, dass die Länge der korrespondierenden Chains kleiner als eine vorgebende Schwelle ist, oder
ii) bei der Kontrolle des zu einer Verbindung gehörigen inversen Vertex festgestellt wird, dieser seinerseits eine Verbindung besitzt, deren inverser Vertex mit dem aktuellen Vertex identisch ist und die Auswertung der Status-Bits beider Verbindungen zeigt, dass die Länge der korrespondierenden Chains kleiner als eine vorgebende Schwelle ist.

In diesem Fall wird eine der Verbindungen V aus der Vertex-Struktur (Liste 110, Fig. 4) gelöscht und der Rang vom aktuellen Vertex dekrementiert. Die verbleibenden Einträge des Vertex in Liste 110 werden nach oben verschoben.

Ebenso wird beim inversen Vertex die gleiche Verbindung V gelöscht, der Rang dekrementiert und die verbleibenden Einträge des Vertex in Liste 110 nach oben verschoben. Weiterhin wird die Chain in Liste 104 als gelöscht markiert. Auch für diese Verarbeitung ist ein Random-Acess-Zugriff auf die Daten der Liste 110 günstig.

Im Folgenden wird eine für die vorstehend beschriebene Datenverarbeitung geeignete Hardware-Implementierung der erfindungsgemäßen Pipeline-Recheneinrichtung beschrieben.

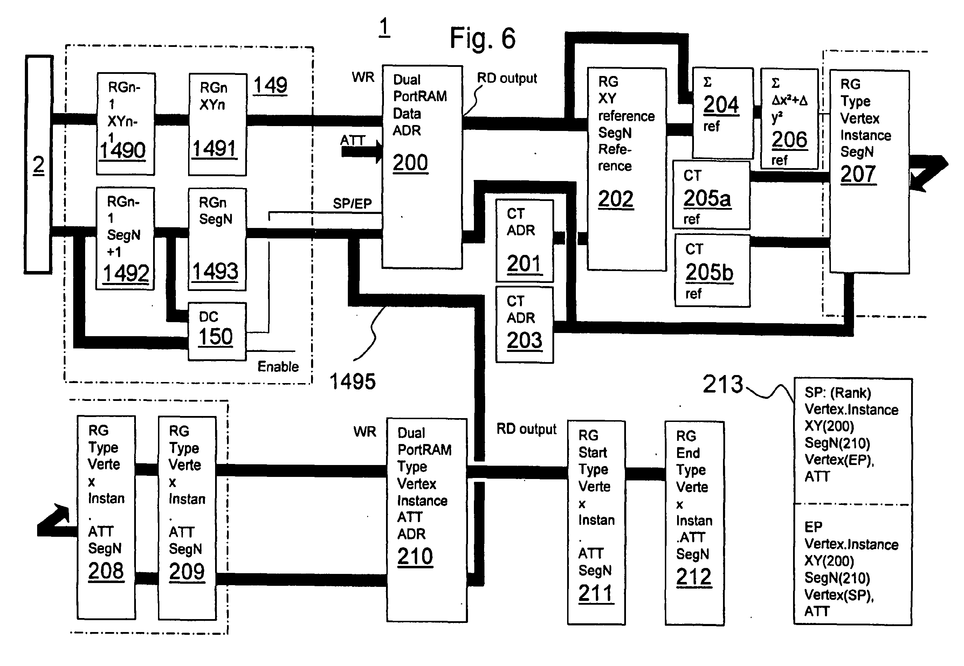

Ein Ausführungsbeispiel von Teilen einer solchen Pipeline-Recheneinrichtung ist in Fig. 6 als schematisches Schaltbild dargestellt.

Die Pipeline-Recheneinrichtung basiert darauf, dass Start- und Endpunkte von Kontursegmenten (chains) in einem schnellen DualPort-RAM 200 abgelegt werden. Mit einem schnellen in der Hardware implementierten Suchprozess werden benachbarte Start- und Endpunkte zu Knoten (vertices) zusammengefasst und doppelt verlinkt.

Durch diese Architektur können ständig neu aus einem Eingangsdatenstrom stammende Start- und Endpunkte gespeichert werden und ohne weitere Zeitverzögerung ausgelesen werden. Es wird eine Pipe definiert, mit der die Berechnung eines Abstandsmasses mittels eines Registers 202 und Addern 204, 206 erfolgt. Damit wird auch die Erfassung benachbarter Kontursegmente auch im Störungsfall unterstützt. Weiterhin wird die Vergabe der Vertexindizes (Instances) im gleichen Prozess durchgeführt. Das Abstandsmass kann der euklidischer Abstand oder auch ein anderer Abstand sein. Möglich und sehr einfach ist beispielsweise auch die Bestimmung des Manhattan-Abstands, der sich für zwei Punkte mit den Koordinaten (x₁, y₁), (x₂, y₂) nach der Beziehung d((x₁, y₁), *(x₂, Y₂))* = |x₁ - x₂| + |y₁ - y₂| berechnet.

Der Teil 149 der Pipeline-Recheneinrictung 1 stellt das Ausgangsinterface für den ersten Prozess dar, in welchem eine Liste von Koordinaten der Start- und Endpunkte von Chains erzeugt und in einem Speicher abgelegt wird. Der Teil 149 umfasst vier Register 1490, 1491, 1492, 1493 und einen Decoder 150.

Aus einem Pipelineprozeß, beziehungsweise einem vorgeordneten Teil 2 der Pipeline-Recheneinrichtung werden zu Chains verlinkte Konturpunkte ausgegeben, die durch eine Segmentnummer SegN und durch ihre Koordinaten sowie weitere Attribute ATT (wie z. B. Kontrast oder Chainlänge) gekennzeichnet sind. Die Erstellung solcher durch Chains verlinkter Konturpunkte wird vorzugsweise mittels eines Pipeline-Prozessors, wie er in der DE 10 2006 044 595 A1 beschrieben ist, durchgeführt. Diese zu Chains verlinkten Konturpunkte stellen geordnete Konturpunktlisten dar, in welchen die Konturpunkte nacheinander entsprechend ihrer Abfolge entlang einer Kontur gelistet sind. Die Konturpunkte werden beginnend mit dem Startpunkt SP in fortlaufender Reihenfolge bis zum Endpunkt EP mit einem einheitlichen Segmentindex SegN oder einer anderen Kennzeichnung der Segmente ausgegeben.

Die Punkte der Listen werden sukzessive durch die Register 1490, 1491 und parallel dazu die Segmentnummern durch die Register 1492, 1493 geführt, bevor sie im Dual-Port-Ram 200 gespeichert werden.
Die Daten erscheinen am Ausgang der Register RGn XYn und RGn SegN, beziehungsweise 1491, 1493. Immer dann wenn sich der Segmentindex ändert, liegt zunächst eine Endpunkt vor, das unmittelbar angrenzende Datum ist der Startpunkt der nächsten Kontur. Durch Vergleich der Segmentindizes im Decoder 150 wird der Start und Endpunkt erkannt, so dass diese auf unterschiedliche Adressen ausgegeben werden können.

Ändert sich also die Segmentnummer, was von Decoder 150 anhand eines Vergleichs des Inhalts der Register 1492, 1493 erkannt wird, so ist in diesem Moment aufgrund der hintereinandergeschalteten Register 1490, 1491 im Register 1491 der letzte Punkt des bisher durch den Teil 149 geleiteten Segments und in Register 1490 der erste Punkt des nächsten Segments gespeichert. Der Decoder 150 kann dann diese Punkte beim Einspeichern in den Dual-Port-RAM als End-, beziehungsweise Startpunkte kennzeichnen.

Der Decoder150 markiert demgemäß die Start- und Endpunkte der Chains (SP/EP). Aus der Segmentnummer SegN und dem Bit zur Markierung der Start- /Endpunkte wird die Adresse im DualportRAM 200 gebildet, hierauf werden die XY-Koordinaten der Start-/Endpunkte eingetragen.

Demgemäß ist in Weiterbildung der Erfindung vorgesehen, dass die Pipeline-Recheneinrichtung 1 zur Durchführung des ersten Prozesses zwei hintereinandergeschaltete Register 1490, 1491 aufweist, durch welche die Konturpunkte sukzessive hindurchgeleitet werden, sowie zwei ebenfalls hintereinandergeschaltete Register 1492, 1493, durch die parallel eine Kennzeichnung von den Konturpunkten zugeordneten Konturpunktsegmenten (in diesem Beispiel die Segmentnummer) hindurchgeleitet wird, wobei ein Decoder vorgesehen ist, welcher den Inhalt der hintereinandergeschalteten Register 1492, 1493, durch die parallel eine Kennzeichnung von den Konturpunkten (101) zugeordneten Konturpunktsegmenten hindurchgeleitet wird, vergleicht und bei einer Abweichung der Registerinhalte die in den Registern, durch welche die Konturpunkte sukzessive hindurchgeleitet werden, momentan gespeicherten Konturpunkte, vorzugsweise beim Abspeichern in den Speicher 200 als End- und Anfangspunkte kennzeichnet. Auf diese Weise kann sehr einfach in einem Pipeline-Prozess eine Liste der Start- und Endpunkte im Speicher 200 erzeugt werden. Die Kennzeichnung erfolgt vorzugsweise, wie oben beschrieben, durch Setzen eines Bits. Die Speicheradresse ergibt sich dann aus dem Lowteil zur Kennzeichnung des Start- bzw. Endpunkts und einem Highteil, aus der um ein Bit nach links verschobenen Segmentnummer besteht. Der zu durchsuchende Speicherbereich kann limitiert werden, indem höhere Adressbits nicht verdrahtet werden.

Im Suchvorgang des zweiten Prozesses wird für jeden Start- und Endpunkt die Liste der Koordinaten der Start- und Endpunkte nach dem letzten Auftreten derselben Koordinaten oder innerhalb einer Umgebung vorbestimmter Grösse, also innerhalb eines Abstands liegenden Koordinaten durchsucht. Im DualPort RAM 200 werden durch den ersten Prozess sämtliche für die Analyse einer lokalen Umgebung erforderlichen Start- und Endpunkte eingetragen. Der erste Prozess folgt dabei im Wesentlichen der Abtastrichtung des Bildsensors, auch das Auslesen der noch kurzen Konturensegmente erfolgt auf diese Weise so, dass im Datenstrom benachbarte Konturelemente auch im DualPort RAM ihre Nachbarschaft im Wesentlichen erhalten. Dies ermöglicht die Verwendung eines vergleichsweise kleinen Dual-Port-RAMs.

Ein Zähler 201 bildet den Readpointer des DualportRAMs 200. Er inkrementiert die zuletzt verarbeitete Adresse solange, bis ein bisher nicht bearbeiteter Start-/Endpunkt am Ausgang "RD output" des DualportRAMs 200 erscheint.

Segmentnummer und XY-Koordinaten werden dann als neuer Referenzpunkt in einem Register 202 gespeichert, simultan wird der Vertex-Zähler 205a inkrementiert und der Instanzzähler 205b auf null gesetzt. Anschließend wird vom Zähler 201 auf einen zweiten Zähler 203 umgeschaltet, der den gesamten Suchbereich mit möglicherweise benachbarten Start- oder Endpunkten durchläuft und dadurch am Ausgang RD output eine Folge von Start- und Endpunkten generiert.

Mit dem Zähler 203 wird der DualPortRAM 200 gescannt, das Register 202 (Referenzspeicher) und die Adder 204,206 berechnen einen Datenstrom mit Abstandswerten. Wenn ein Abstand (z.B. der euklidische Abstand) kleiner als ein Schwellwert ε ist, dann wird angenommen, dass die betreffenden Start- und Endpunkte zu einem Knoten gehören. Im Speziellen wird bei dem in Fig. 6 gezeigten Ausführungsbeispiel ein Referenzpunkt ausgewählt und im Register 202 gespeichert. Die Adder 204, 206 berechnen dann den Abstand des Referenzpunkts zu den beim Scannen des Dual-Port-RAMs 200 ausgelesenen Koordinatenwerten der gespeicherten Punkte.

Vorzugsweise wird als sehr genaues Abstandsmass der euklidische Abstand berechnet. Dazu stellen die Adder 204 und 206 inklusive einer nicht gezeigten Look-up table zum Quadrieren der Koordinatendifferenzen Δx und Δz am Ausgang von 206 den Euklidischen Abstand zwischen dem Referenzpunkt und den jeweils einlaufenden Start- und Endpunkten bereit. Wenn der Euklidische Abstand kleiner als ein Maß ε ist, dann wird ein Instanzzähler 205b inkrementiert, die Instanz, der Segmentindex und der Vertex-Index sowie die Attribute ATT werden im Register 207 gespeichert. Wenn die Koordinaten identisch sind, wird der Type auf 0 gesetzt, andernfalls auf 1. Die Look-up-table ermöglicht es, eine nichtlineare Abstandsberechnung, wie insbesondere die Berechnung des euklidischen Abstands mit einfachen, dafür sehr schnellen Addern zu bewerkstelligen.

Die Zähler 205a, 205b und die im Datenstrom nachfolgenden Elemente der Pipeline-Recheneinrichtung dienen unter anderem zur Durchführung des dritten Prozesses, in welchem jedem Start- oder Endpunkt einen Vertex-Index und einen Instanz-Index zugewiesen wird, wobei zusammengehörige Punkte aus der Menge der Anfangs- und Endpunkte denselben Vertex-Index erhalten und wobei zusammengehörige Punkte solche Punkte aus der Menge der Anfangs- und Endpunkte sind, welche dieselben Koordinaten oder Koordinaten aufweisen, die innerhalb der Umgebung vorbestimmter Grösse liegen.

An das Register 207 sind ein oder mehrere gleichartige Register 208, 209 gekoppelt, die zusammen ein Schieberegister bilden. Die Länge dieses Schieberegisters ist gleich oder größer der Anzahl der von einem Vertex ausgehenden Verbindungen. Durch Dekodierung ist es möglich, die Anzahl der von einem Vertex abgehenden Verbindungen (den Rang) zu bestimmen.

Die Zähler 205a,b und das Register 207 bilden eine Struktur, um einen Datenstrom mit den Einträgen des betreffenden Knotens (Vertex) zu generieren. Am Ausgang von Register 207 entsteht die Tabelle nach Fig.4 in geordneter Reihenfolge. Die Register 207 bis 209 (und evtl. weitere gleichartige Register) dienen demgemäß zur Rangbestimmung, also der Anzahl der von einem Vertex abgehenden bzw. eingehenden Verbindungen. Diese Liste kann dann an einen Prozessor übergeben werden und beschreibt den Graphen, d.h. sämtliche von Knoten abgehenden bzw. einlaufenden Verbindungen.

Mit jedem Schiebetakt des Registers 209 wird die Information in den Dual-Port RAM 210 geschrieben. Synchron zum Schreiben auf den Dual-Port RAM 200 wird der DualportRAM 210 gelesen. Die Ausgangsdaten des DualportRAMs 210 werden in einem Doppelregister 211, 212 gespeichert, so dass die vollständige zu einem Chain gehörende Information, insbesondere auch die in Opposition stehenden Punkte mit ihren Vertex-Indizes bereitsteht. Diese Information, die Verweise aus Kontursegmenten auf Knoten des Graphen enthält (doppelte oder inverse Verlinkung) ist für die effiziente Verfolgung von Umläufen von besonderem Vorteil.

Deshalb ist in Weiterbildung der Erfindung die Pipeline-Recheneinrichtung dazu eingerichtet, die Knoten, beziehungsweise Vertizes mit ihren Instanzen unter Vertauschung von Daten und Adressen im DualPortRAM 210 zu speichern, um im dritten Prozess in das Doppelregister zu einem Start- oder Endpunkt einer mit einem Vertex verbundenen Chain Information, welche eine Vertex-Instanz, die Koordinaten, eine Segmentnummer, den Vertex-Index des Start- oder Endpunktes und weitere Attribute umfassen, zum zugehörigen, in Opposition stehenden End- oder Startpunkt der Chain einzutragen.

Auf der Adresse des Index des Kontursegments unter Einbeziehung eines Adressbits für die Kennzeichnung von Start und Ende wird der Knotenindex und Instanzindex gespeichert. Mit einem bestimmten zeitlichen Abstand kann nun dieser Speicher ebenfalls ausgelesen werden. Er liefert in kontinuierlicher Reihenfolge die Links der Kontursegmente auf die zugeordneten Knoteninstanzen.

Ein beispielhafter Aufbau des Speicherinhalts des Doppelregisters 211, 212 ist mit dem Bezugszeichen 213 bezeichnet. Der gestrichelte Trennstrich verdeutlicht die Einteilung des Inhalts auf die Register 211, 212. Demnach werden im Register 211 Daten des Startpunkts ("SP") abgelegt. Diese sind vorzugsweise bereits hier der Rang des zugehörigen Vertex ("Rank"), die Vertex-Instanz ("Vertex.Instance"), die Koordinaten des Startpunkts ("XY"), die Segment-, beziehungsweise Chain-Nummer, mit welcher die Chains sukzessive durchnummeriert sind ("SegN"), der Vertex-Index des zugehörigen Endpunkts ("Vertex(EP)") und weitere Attribute ("ATT") abgelegt. Im Register 212 werden für den zugehörigen, in Opposition stehenden Endpunkt ("EP") die Vertex-Instanz ("Vertex.Instance"), dessen Koordinaten ("XY"), die Segmentnummer ("SegN") und der Vertex-Index des Startpunkts ("Vertex(SP)") abgespeichert.

Aus dem Doppelregister werden die Daten so formatiert, dass die Struktur 109 entsteht. Dieser Datenstrom wird abschließend als Graph in der Vertex-Struktur 110 gespeichert. Dazu kann ein weiterer, nicht in Fig. 6 dargestellter Speicher verwendet werden.

Wie bereits oben erwähnt wurde, wird der DualportRAM 210 synchron zum Schreiben auf den Dual-Port RAM 200 gelesen. Dazu ist eine Die 1495 vom Adress-Eingang des Dual-Port RAM 200 zum Dual-Port-RAM 210 vorgesehen, die eine synchrone Adressierung beider Speicher mit konstantem Taktabstand bewirkt.

Die Synchronisation der Prozesse in der Pipeline-Recheneinrichtung 1 wird im Folgenden an einem Beispiel nochmals genauer erläutert. Die Kontursegmente, beziehungsweise Chains werden wie gesagt am Eingang der Schaltung nach Fig.6 von Teil 2 als kontinuierlicher Datenstrom mit fortlaufendem Segment-Index eingegeben. Die nachstehende Tabelle gibt ein Beispiel für den Datenstrom in der Pipeline-Recheneinrichtung 1 zu Beginn der Verarbeitung:

| **Segment Index** | **Adresse DualPort RAM** | **verdrahtete Start/ Teiladresse Endpunkt** | | **RD output** | **Input** |
|---|---|---|---|---|---|
| **RGn** | **200,210** | | | **210** | **200** |
| **SegN** | | | | | |
| 0x007D | 0x00FB | 0x00FB | EP | void | 0x007D |
| 0x007E | 0x00FC | 0x00FC | SP | void | 0x007E |
| 0x007E | 0x00FD | 0x00FD | EP | void | 0x007E |
| 0x007F | 0x00FE | 0x00FE | SP | void | 0x007F |
| 0x007F | 0x00FF | 0x00FF | EP | void | 0x007F |
| 0x0080 | 0x0100 | 0x0000 | SP | SP 0x0000 | 0x0080 |
| 0x0080 | 0x0101 | 0x0001 | EP | EP 0x0000 | 0x0080 |
| 0x0081 | 0x0102 | 0x0002 | SP | SP 0x0001 | 0x0081 |
| 0x0081 | 0x0102 | 0x0002 | EP | EP 0x0001 | 0x0081 |

In der ersten Spalte, die dem Ausgang des Registers RGn-SegN, Bezugszeichen 1493, entspricht, sind die SegmentIndizes beispielhaft dargestellt. Für jeden Start- und Endpunkt wird der gleiche Segment-Index verwendet. Damit nun Start- und Endpunkte unterschieden werden können, wird beispielsweise der Segment Index um eine Binärstelle nach links verschoben und ein Bit SP/EP in die Adresse eingefügt. Die entsprechenden Adressen sind in der zweiten Spalte der Tabelle gelistet. Diese Adresse wird für das Schreiben des DualPort RAM's 200 und das Lesen aus dem DualPort RAM 210 in gleicher Weise verwendet.

Bedingt durch das verwendete Abtast- und Segmentierungsverfahren ist die Lage verbundener Kontursegmente im Datenstrom nicht wahlfrei. Für jeden Start- und Endpunkt sind die dazugehörigen Start- oder Endpunkte verbundener Kontursegmente in der Nähe angeordnet. Dies bedeutet, dass die Differenz der Segmentindizes benachbarter Kontursegmente auf eine systemabhängige konstante Größe begrenzt ist.

Im oberen Beispiel wurde der Einfachheit halber angenommen, dass die maximale Indexdifferenz benachbarter Kontursegmente kleiner 128 sei, in hexadezimaler Schreibweise also kleiner 0x0080. Der Suchbereich kann damit auf diese Größe begrenzt werden. Falls systembedingt ein größerer Bereich benötigt wird, können größere DualPort RAM's 200, 210 mit erweitertem Adressbereich eingesetzt werden.

Die Pipeline-Recheneinrichtung schreibt nun zu Beginn jeden Bildes zunächst 128 Start- und 128 Endpunkte in den DualPort RAM 200 bis zur Adresse 0x00FF. Der Suchprozess läuft während dieser Zeit, die Ausgabe des DualPort RAM's 210 ist aber ungültig (void). Nach Eintragung des 128. Start-/Endpunkts sind sämtliche benachbarten Elemente im DualPort RAM 200, also folglich auch korrekt im DualPort RAM 210 abgelegt.

Anschließend werden der Start- und Endpunkt des 129-ten Kontursegments auf die Adresse 0x0080 in den DualPort RAM 200 eingetragen, die vorherigen Daten werden überschrieben, da in diesem Beispiel die höherwertigen Adressen nicht verdrahtet sind. Unter der gleichen Adresse stehen am Ausgang des DualPortRAM's 210 die Daten für das Konturelement 0x0000, als des zuerst eingeschriebenen Konturelements zur Verfügung.

Die Register 207, 208, 209 erzeugen eine Verzögerung, so dass möglicherweise schnell gefunden Verbindungen für das neue Konturelement auf 0x0080 verzögert in den DualPortRAM 210 geschrieben werden und nicht vorzeitig Daten des Elements 0x0000 überschreiben.

Der Pipelineprozessor verwendet im Beispiel eine Verzögerung von 129 Kontursegmenten. Nach Bildende, beziehungsweise nach Abarbeitung aller Bilddaten eines Bildes werden 129 zusätzliche Zyklen ohne Eingangsdaten eingesetzt, um die verbliebenen Daten aus dem Dual-Port RAM 210 auszugeben.

Die Adressierung der beiden Dual-Port RAM 200, 210 erfolgt also nach dem obigen Beispiel synchron mit den gleichen Adressen, die sich aber aufgrund der Verzögerung der Prozesse und des begrenzten Adressraums tatsächlich auf unterschiedliche Start- und Endpunkte, beziehungsweise auf unterschiedliche Chains beziehen.
Mit der erfindungsgemäßen Architektur, wie sie beispielhaft anhand von Fig. 6 beschrieben wurde, wird ein Pipelineprozessor für die Erzeugung von Graphen aus Kontursegmenten bereitgestellt, der in einen Schaltkreis, wie insbesondere in einem FPGA ohne zusätzliche externe Elemente integriert werden kann.

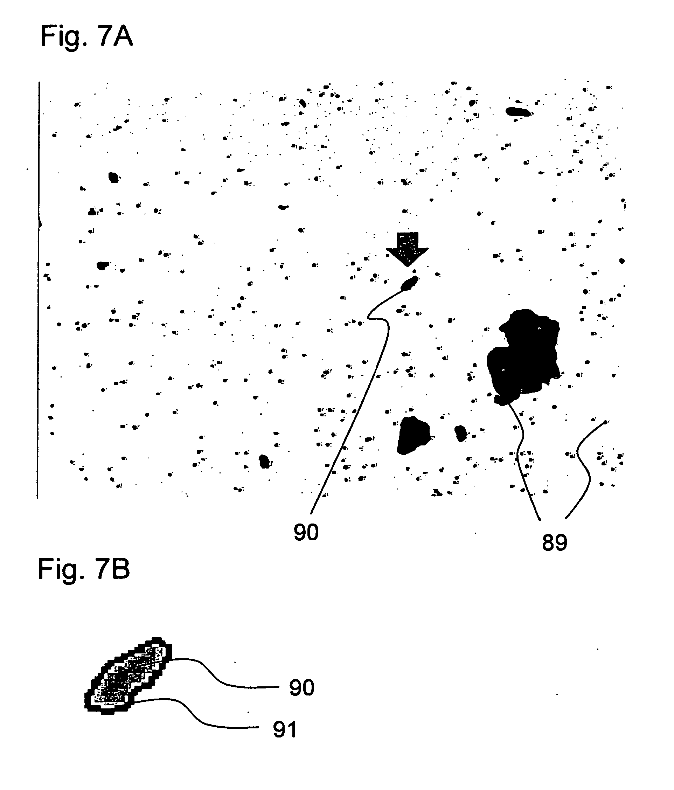

Anhand der Fig. 7A und 7B wird ein Anwendungsbeispiel der Erfindung in einem industriellen Prozess veranschaulicht.

Fig. 7A zeigt ein mit einer Kamera aufgenommenes Bild eines Mehl-Partikelstroms mit Partikeln 89, 90 verschiedener Größe. Mit den Bildern wird unter Verwendung der erfindungsgemäßen Pipeline-Recheneinrichtung eine automatisierte Partikelanalyse zur automatischen Steuerung von Walzenstühlen für Mühlen in Echtzeit durchgeführt.
Die Partikel werden dem Mahlstrom entnommen und durch einen Kanal mit 20m/s geblasen. Konturen werden mit Hardware ermittelt, man erreicht mit 50 Bildern/s Echtzeitfähigkeit. Ziel ist die hochpräzise Berechnung der Flächenverteilung der Partikel. Hierzu werden die Objekte z.B. nach Farbe oder Formmerkmalen in verschiedene Klassen geteilt und dann Flächenhistogramme berechnet, die anstelle oder ergänzend zu bisher offline erzeugten Siebmessungen verwendet werden.

Fig. 7B zeigt vergrößert den in Fig. 7A mit einem Pfeil gekennzeichneten Partikel 90. Mittels der erfindungsgemäßen Pipeline-Recheneinrichtung wurden die das Partikelbild begrenzenden Kontursegmente zu einer durchgehenden, geschlossenen Kontur 91 in Echtzeit verbunden. Dies bedeutet, dass die geschlossene Kontur 91 in Form von Listendaten innerhalb eines Zeitraums der Bildaufnahmeperiode für alle erkannten Partikel im Bild zur Verfügung steht. Diese Kontur 91 kann nun zur Ermittlung der Fläche des Partikels 90 eingesetzt werden.

Allgemein, ohne Beschränkung auf das in den Fig. 7A, 7B gezeigte Beispiel kann die erfindungsgemäße Vorrichtung daher dazu verwendet werden, oder dazu ausgebildet sein, geschlossene Konturen von Objekten, insbesondere zu deren Identifizierung und/oder Ermittlung eines Flächenmaßes der Objekte zu bestimmen.

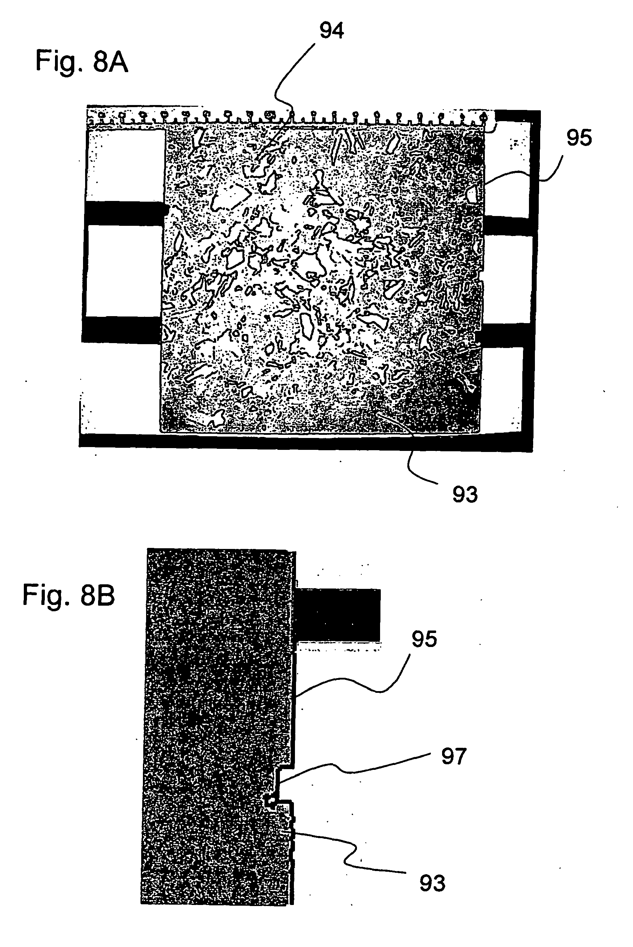

Nachfolgend wird anhand der Fig. 8A und 8B ein weiteres Anwendungsbeispiel in einem industriellen Fertigungsprozess beschrieben. Im Speziellen kann die erfindungsgemäße Pipeline-Recheneinrichtung auch zur Inspektion von Wafern eingesetzt werden.

Fig. 8A zeigt das Bild eines Wafers 93. Es werden zunächst sämtliche Konturen 94, 95 im Bild bestimmt.

Nachdem eine Verlinkung der gefundenen Kontursegmente zu langen Konturen mittels der erfindungsgemäßen Pipeline-Recheneinrichtung durchgeführt wurde, können anschließend lange Konturen gesucht, die partiell linienhaft approximiert sind. Dies kann beispielsweise durch Krümmungsanalyse ("Curvature analysis") per Software durchgeführt werden. Fig 8A zeigt ein Bild vom Rand des Wafers. Zusätzlich eingezeichnet ist die in diesem Ausschnitt aufgrund der Krümmungsanalyse verbliebene lange Kontur 95. Wie anhand des Bildes erkennbar ist, repräsentiert diese lange Kontur 95 den Rand des Wafers 93. Wie weiter zu erkennen ist, gibt die Kontur auch einen Ausbruch 97 am Rand des Wafers 93 wieder. Es wurde hiermit verdeutlicht, dass mittels der Erfindung unabhängig vom Hintergrund die Außenumrisse von Wafern oder Platten aufgefunden und in Form langer Konturen dargestellt werden können und damit auch Ausbrüche einfach und sicher aufgefunden werden können.

Es ist dem Fachmann ersichtlich, dass eine hohe Anzahl weiterer technischer Applikationen für die erfindungsgemäße Pipeline-Recheneinrichtung und das erfindungsgemäße Verfahren aus unterschiedlichen industriellen Anwendungsgebieten existieren.

Es ist dem Fachmann ersichtlich, dass die Erfindung nicht auf die vorstehend beschriebenen beispielhaften Ausführungsformen beschränkt ist, sondern vielmehr in vielfältiger Weise variiert werden kann. Insbesondere können die Merkmale der einzelnen Ausführungsbeispiele auch miteinander kombiniert werden. So kann beispielsweise die Zuordnung der Speicherinhalte der Datenstruktur 213 auch gerade umgekehrt auf die beiden Register 211, 212 verteilt werden.

## Patentansprüche

1. Pipeline-Recheneinrichtung (1) speziell eingerichtet für die Verbindung von Konturelementen aus Bilddaten, umfassend zumindest eine Pipelineprozessor-Einrichtung, welche eingerichtet ist,
- in einem ersten Prozess eine Liste (108) von Koordinaten der Start- und Endpunkte (100, 102) von Chains (105), die aus einer Menge von zu einer Kontur gehörenden Konturpunkten (101) in geordneter Reihenfolge bestehen, zu erzeugen und in einem Speicher abzulegen,
- und in einem zweiten Prozess für jeden Start- und Endpunkt (100, 102) die Liste (108) der Koordinaten der Start- und Endpunkte (100, 102) nach dem letzten Auftreten derselben Koordinaten oder innerhalb einer Umgebung vorbestimmter Grösse liegenden Koordinaten zu durchsuchen,
- und in einem dritten Prozess jedem Start- oder Endpunkt (100, 102) einen Vertex-Index und einen Instanz-Index zuweist, wobei der Vertex-Index ein fortlaufender Index der Vertices (107) ist und der Instanz-Index ein fortlaufender Index der zu einem Vertex (107) gehörenden Start- und Endpunkte (100, 102) darstellt, wobei zusammengehörige Punkte aus der Menge der Anfangs- und Endpunkte (100, 102) denselben Vertex-Index erhalten und wobei zusammengehörige Punkte solche Punkte aus der Menge der Anfangs- und Endpunkte (100, 102) sind, welche dieselben Koordinaten oder Koordinaten aufweisen, die innerhalb der Umgebung vorbestimmter Grösse liegen.

2. Pipeline-Recheneinrichtung (1) gemäß dem vorstehenden Anspruch, **dadurch gekennzeichnet, dass** die Pipeline-Recheneinrichtung (1) dazu eingerichtet ist, in einem vierten Prozess die Vertex- und Instanz-Indizes von jeweils zwei bezüglich der Enden einer Chain (105) in Opposition stehenden Start- und Endpunkte (100, 102) in eine Vertex-Struktur zusammen mit einem Index der verbindenden Chain (105) einzutragen.

3. Pipeline-Recheneinrichtung (1) gemäß dem vorstehenden Anspruch, wobei der vierte Prozess durch einen Schreibvorgang für die Vertex-Struktur **gekennzeichnet** ist, bei dem zunächst zumindest einige, vorzugsweise alle Informationen für einen Vertex (107) durch einen Suchprozess zusammengetragen und in einem Registersatz zwischengespeichert werden, bevor der Vertex (107) in die Vertex-Struktur eingetragen wird und dass Informationen aus der Menge der zu einem Vertex (107) verbundenen Chains (105) extrahiert und gespeichert werden.

4. Pipeline-Recheneinrichtung (1) gemäß einem der Ansprüche 2 und 3, wobei die Pipeline-Recheneinrichtung (1) eingerichtet ist, im vierten Prozess Informationen aus der Menge der zu einem Vertex (107) verbundenen Chains (105) in Form der Länge der Chains (105) und deren in Opposition zum Vertex (107) stehenden Start- oder Endpunkte (100, 102) der Chains (105) in der Vertex-Struktur zu speichern, wobei die Pipeline-Recheneinrichtung (1) außerdem eingerichtet ist,
für jeden Vertex (107) zu prüfen, ob dessen Vertex-Index identisch zum Vertex-Index des in Opposition stehenden Start- oder Endpunktes (100, 102) ist und die Länge der zugehörigen Chain (105) unterhalb eines vorbestimmten Werts liegt, wobei im Falle, dass diese Bedingungen erfüllt sind, ein Rang des Vertex (107) doppelt dekrementiert wird, und ein Listeneintrag der Verbindung mit identischem Vertexindex und Vertex-Index des in Opposition stehenden Start- oder Endpunktes (100, 102) gelöscht wird.

5. Pipeline-Recheneinrichtung (1) gemäß einem der Ansprüche 2, 3 oder 4, wobei die Pipeline-Recheneinrichtung (1) eingerichtet ist, im vierten Prozess Informationen aus der Menge der zu einem Vertex (107) verbundenen Chains (104) in Form der Länge der Chains (105) und deren in Opposition zum Vertex (107) stehenden Start- oder Endpunkte (100, 102) der Chains (105) in der Vertex-Struktur zu speichern, wobei die Pipeline-Recheneinrichtung (1) außerdem eingerichtet ist, für jeden Vertex (107) zu prüfen, ob mindestens zwei der zu einem Vertex (107) gehörenden Verbindungen den gleichen Vertex-Index des in Opposition stehenden Start- oder Endpunktes (100, 102) aufweisen oder ob zu dem in Opposition stehende Vertex (107) eine weitere Verbindung existiert, deren Vertex-Index mit dem in Opposition stehenden Vertex-Index identisch und die Länge der zu den Verbindungen korrespondierenden Chains (105) kürzer als ein vorgegebener Wert ist, wobei im Falle, dass diese Bedingungen zutreffen, einer der beiden Listeneinträge der Verbindungen gelöscht oder beide Einträge gelöscht und eine neue Verbindung erzeugt und eingetragen wird, wobei in beiden Fällen der Rang des Vertex (107) einfach dekrementiert wird.

6. Pipeline-Recheneinrichtung (1) gemäß einem der vorstehenden Ansprüche, wobei die Pipeline-Recheneinrichtung (1) zwei unabhängige Dualport-RAM-Speicher (200, 210) aufweist, wobei die Pipeline-Recheneinrichtung (1) eingerichtet ist,
- die im ersten Prozess erzeugte Liste (108) von Koordinaten der Start- und Endpunkte (100, 102) von Chains (105) in einem ersten Dualport-RAM-Speicher (200) zu speichern und
- im dritten Prozess eine Liste (109) mit Vertex-Indices und Instanz-Indices im zweiten Dualport-RAM-Speicher (210) abzuspeichern.

7. Pipeline-Recheneinrichtung (1) gemäß einem der vorstehenden Ansprüche, wobei die Pipeline-Recheneinrichtung (1) dazu eingerichtet ist, bei der im ersten Prozess erzeugten Liste (108) von Koordinaten der Start- und Endpunkte (100, 102) zusätzlich eine Statusinformation hinzuzufügen, welche die Start- und Endpunkte (100, 102) als im zweiten Prozess noch nicht bearbeitet markiert, und wobei im zweiten Prozess ein Zeiger auf die Listeneinträge inkrementiert wird, bis ein als noch nicht bearbeitet markierter Start- oder Endpunkt (100, 102) erreicht wird, und wobei die Koordinaten dieses Punktes dann in einem Register (202) gespeichert werden, und die Liste (108) dann nach mit diesem Punkt zusammengehörenden Punkten durchsucht wird, wobei die im Register (202) gespeicherten Koordinaten mit den Koordinaten der Start- und Endpunkte (100, 102) der Liste (108) verglichen werden.

8. Pipeline-Recheneinrichtung (1) gemäß einem der vorstehenden Ansprüche, wobei die Pipeline-Recheneinrichtung (1) dazu eingerichtet ist, zumindest ein Bit für die Unterscheidung eines Startpunkts (100) von einem Endpunkt (102) zuzuweisen.

9. Pipeline-Recheneinrichtung (1) gemäß einem der vorstehenden Ansprüche, **dadurch gekennzeichnet, dass** die Pipeline-Recheneinrichtung (1) zur Durchführung des ersten Prozesses zwei hintereinandergeschaltete Register (1490, 1491) aufweist, durch welche die Konturpunkte (101) sukzessive hindurchgeleitet werden, sowie zwei ebenfalls hintereinandergeschaltete Register (1492, 1493), durch die parallel eine Kennzeichnung von den Konturpunkten (101) zugeordneten Konturpunktsegmenten hindurchgeleitet wird, wobei ein Decoder (150) vorgesehen ist, welcher den Inhalt der hintereinandergeschalteten Register (1492, 1493), durch die parallel eine Kennzeichnung von den Konturpunkten (101) zugeordneten Konturpunktsegmenten hindurchgeleitet wird, vergleicht und bei einer Abweichung der Registerinhalte die in den Registern (1490, 1491), durch welche die Konturpunkte (101) sukzessive hindurchgeleitet werden, momentan gespeicherten Konturpunkte (101), vorzugsweise beim Abspeichern in den Speicher (200) als End- und Anfangspunkte (102, 100) kennzeichnet.

10. Pipeline-Recheneinrichtung (1) gemäß einem der vorstehenden Ansprüche, **gekennzeichnet durch** eine der Recheneinrichtung des ersten Prozesses vorgeordnete Pipeline-Recheneinrichtung, welche eingerichtet ist, aus Bilddaten Konturpunkte (101) zu ermitteln und die zu einer Kontur gehörenden Konturpunkte (101) als Chains (105) in Form von Listendaten auszugeben, in welchen die Konturpunkte (101) in geordneter Reihenfolge entsprechend ihrer Abfolge entlang der Kontur gelistet sind.

11. Pipeline-Recheneinrichtung (1) gemäß einem der vorstehenden Ansprüche, **gekennzeichnet durch** ein Doppelregister (211, 212), wobei die Pipeline-Recheneinrichtung (1) eingerichtet ist, im dritten Prozess in das Doppelregister (211, 212) zu einem Start- oder Endpunkt (100, 102) einer mit einem Vertex (107) verbundenen Chain (105) Information, welche eine Vertex-Instanz, die Koordinaten, eine Segmentnummer, den Vertex-Index des Start- oder Endpunktes (100, 102) und weitere Attribute umfassen, zum zugehörigen, in Opposition stehenden End- oder Startpunkt (102, 100) der Chain (105) einzutragen.

12. Pipeline-Recheneinrichtung (1) gemäß dem vorstehenden Anspruch, welche dazu eingerichtet ist, die Vertizes (107) mit ihren Instanzen unter Vertauschung von Daten und Adressen in einem Dual-Port RAM (210) zu speichern.

13. Verfahren zur Verbindung von Konturelementen aus Bilddaten mittels zumindest einer hierfür speziell eingerichteten Pipelineprozessor-Einrichtung, bei welchem
- in einem ersten Prozess eine Liste (108) von Koordinaten der Start- und Endpunkte (100, 102) von Chains (105), die aus einer Menge von zu einer Kontur gehörenden Konturpunkten (101) in geordneter Reihenfolge bestehen, erzeugt und in einem Speicher abgelegt,
- und in einem zweiten Prozess für jeden Start- und Endpunkt (100, 102) die Liste (108) der Koordinaten der Start- und Endpunkte (100, 102) nach dem letzten Auftreten derselben Koordinaten oder innerhalb einer Umgebung vorbestimmter Grösse liegenden Koordinaten durchsucht,
- und in einem dritten Prozess jedem Start- oder Endpunkt (100, 102) einen Vertex-Index und einen Instanz-Index zugewiesen wird, wobei der Vertex-Index einen fortlaufenden Index der Vertices (107) ist und der Instanz-Index ein fortlaufender Index der zu einem Vertex (107) gehörenden Start- und Endpunkte (100, 102) darstellt, und wobei zusammengehörige Punkte aus der Menge der Anfangs- und Endpunkte (100, 102) denselben Vertex-Index erhalten und wobei zusammengehörige Punkte solche Punkte aus der Menge der Anfangs- und Endpunkte (100, 102) sind, welche dieselben Koordinaten oder Koordinaten aufweisen, die innerhalb der Umgebung vorbestimmter Grösse liegen.

14. Verfahren gemäß dem vorstehenden Anspruch, wobei fortlaufend Chains (105) dem ersten Prozess zugeführt werden und der erste, zweite und dritte Prozess gleichzeitig durchgeführt werden.

15. Verfahren gemäß einem der beiden vorstehenden Ansprüche, **dadurch gekennzeichnet, dass** zumindest ein Bit für die Unterscheidung eines Startpunkts (100) von einem Endpunkt (102) zugewiesen und abgespeichert wird.

## Claims

1. Pipelined computing device (1) specially set up for the connection of contour elements from image data, comprising at least one pipelined processor device which is set up
- in a first process to create and to store in a memory a list (108) of coordinates of the starting and end points (100, 102) of chains (105) which consist of a set of contour points (101) belonging to a contour, in an ordered series,
- and in a second process for each starting and end point (100, 102) to search the list (108) of the coordinates of the starting and end points (100, 102) for the last occurrence of the same coordinates or coordinates located within an environment of a predetermined size,
- and in a third process to assign each starting or end point (100, 102) a vertex index and an instance index, whereby the vertex index is a consecutive index of the vertices (107) and the instance index represents a consecutive index of the starting and end points (100, 102) belonging to a vertex (107), whereby related points from the set of starting and end points (100, 102) are given the same vertex index and whereby related points are those points from the set of starting and end points (100, 102) which have the same coordinates or coordinates which are located within the environment of a predetermined size.

2. Pipelined computing device (1) in accordance with the above Claim, **characterized in that** in a fourth process the pipelined computing device (1) is set up to record the vertex and instance indices of each of the two starting and end points (100, 102) standing in opposition with respect to the ends of a chain (105) in a vertex structure together with an index of the connecting chain (105).

3. Pipelined computing device (1) in accordance with the above Claim, whereby the fourth process is **characterized by** a writing process for the vertex structure in which initially at least some, preferably all information items for a vertex (107) are collected by means of a search process and buffered in a register set before the vertex (107) is recorded in the vertex structure, and in that information from the set of chains (105) connected to form a vertex (107) is extracted and stored.

4. Pipelined computing device (1) in accordance with one of the Claims 2 and 3, whereby the pipelined computing device (1) is set up in the fourth process to save information from the set of chains (105) connected to form a vertex (107) in the form of the length of the chains (105) and the starting or end points (100, 102) of the chains (105) standing in opposition to the vertex (107) in the vertex structure, whereby the pipelined computing device (1) is also set up for each vertex (107) to test whether its vertex index is identical to the vertex index of the starting or end point (100, 102) standing in opposition and the length of the related chain (105) is below a predetermined value, whereby, in the event that these conditions should be fulfilled, a rank of the vertex (107) is decremented by two, and a list entry of the connection with an identical vertex index and vertex index of the starting or end point (100, 102) standing in opposition is deleted.

5. Pipelined computing device (1) in accordance with one of the Claims 2, 3 or 4, whereby the pipelined computing device (1) is set up in the fourth process to save information from the set of chains (104) connected to form a vertex (107) in the form of the length of the chains (105) and the starting or end points (100, 102) of the chains (105) standing in opposition to the vertex (107) in the vertex structure, whereby the pipelined computing device (1) is also set up for each vertex (107) to test whether at least two of the connections belonging to a vertex (107) have the same vertex index of the starting or end point (100, 102) standing in opposition or whether, in addition to the vertex (107) standing in opposition there exists a further connection whose vertex index is identical to the vertex index standing in opposition and the length of the chains (105) corresponding to the connections is shorter than a predetermined value, whereby, in the event that these conditions should be fulfilled, one of the two list entries of the connections is to be deleted or both entries are to be deleted and a new connection created and recorded, whereby in both cases the rank of the vertex (107) is to be decremented by one.

6. Pipelined computing device (1) in accordance with one of the above Claims, whereby the pipelined computing device (1) has two independent dual-port RAM memories (200, 210), whereby the pipelined computing device (1) is set up
- to save the list (108) of coordinates of the starting and end points (100, 102) of chains (105) created in the first process in a first dual-port RAM memory (200) and
- in the third process to save a list (109) with vertex indices and instance indices in the second dual-port RAM memory (210).

7. Pipelined computing device (1) in accordance with one of the above Claims, whereby the pipelined computing device (1) is set up to add additional status information to the list (108) of coordinates of the starting and end points (100, 102) created in the first process marking the starting and end points (100, 102) as not yet processed in the second process, and whereby a pointer to the list entries is incremented until a starting or end point (100, 102) marked as not yet processed is reached, and whereby the coordinates of this point are then saved in a register (202), and the list (108) is then searched for points belonging to this point, whereby the coordinates saved in the register (202) are compared with the coordinates of the starting and end points (100, 102) of the list (108).

8. Pipelined computing device (1) in accordance with one of the above Claims, whereby the pipelined computing device (1) is set up to assign at least one bit for the differentiation of a starting point (100) from an end point (102).

9. Pipelined computing device (1) in accordance with one of the above Claims, **characterized in that** the pipelined computing device (1) has two registers connected in series (1490, 1491) to perform the first process, and through which the contour points (101) are successively conducted, as well as two registers also connected in series (1492, 1493) through which, parallel to this, an identification of the contour point segments assigned to the contour points (101) is also conducted, whereby a decoder (150) is provided to compare the content of the registers connected in series (1492, 1493), through which, parallel to this, an identification of the contour point segments assigned to the contour points (101) is conducted and, in the event of a discrepancy in the register contents, identifies the contour points (101) currently saved in the registers (1490, 1491) through which the contour points (101) are successively conducted as end and starting points (102, 100), preferably when being saved to the memory (200).

10. Pipelined computing device (1) in accordance with one of the above Claims, **characterized by** a pipelined computing device upstream of the computing device of the first process, which is set up to determine contour points (101) from image data and to output the contour points (101) belonging to a contour as chains (105) in the form of list data, in which the contour points (101) are listed in an ordered sequence along the contour in accordance with their order.

11. Pipelined computing device (1) in accordance with one of the above Claims, **characterized by** a double register (211, 212), whereby the pipelined computing device (1) is set up in the third process to record information in the double register (211, 212) relating to a starting or end point (100, 102) of a chain (105) connected to a vertex (107), said information comprising a vertex instance, the coordinates, a segment number, the vertex index of the starting or end point (100, 102) and further attributes and pertaining to the related end or starting point (102, 100) of the chain (105) standing in opposition.

12. Pipelined computing device (1) in accordance with the above Claim, which is set up to store the vertices (107) with their instances while interchanging data and addresses in a dual-port RAM (210).

13. Procedure for connecting contour elements from image data by means of at least one pipeline processor device specially set up for this, which
- in a first process creates and stores in a memory a list (108) of coordinates of the starting and end points (100, 102) of chains (105) which consist of a set of contour points (101) belonging to a contour, in an ordered series,
- and in a second process for each starting and end point (100, 102) searches the list (108) of the coordinates of the starting and end points (100, 102) for the last occurrence of the same coordinates or coordinates located within an environment of a predetermined size,
- and in a third process each starting or end point (100, 102) is assigned a vertex index and an instance index, whereby the vertex index is a consecutive index of the vertices (107) and the instance index represents a consecutive index of the starting and end points (100, 102) belonging to a vertex (107), and whereby related points from the set of starting and end points (100, 102) are given the same vertex index and whereby related points are those points from the set of starting and end points (100, 102) which have the same coordinates or coordinates which are located within the environment of a predetermined size.

14. Procedure in accordance with the above Claim, whereby chains (105) are continuously fed to the first process and the first, second and third processes are performed simultaneously.

15. Procedure in accordance with one of the two above Claims, **characterized in that** at least one bit is assigned and stored for the differentiation of a starting point (100) from an end point (102).

## Revendications

1. Dispositif de calcul de pipeline (1) spécialement conçu pour la liaison d'éléments de contour à partir de données d'image, comprenant au moins un dispositif de traitement de pipeline qui est conçu
- pour générer, au cours d'un premier processus, une liste (108) de coordonnées de points de départ et d'arrivée (100, 102) de chaînes (105), qui sont composées d'une quantité de points de contour (101) appartenant à un contour dans une suite ordonnée et pour enregistrer ladite liste dans une mémoire,
- et pour parcourir, au cours d'un deuxième processus, pour chaque point de départ et d'arrivée (100, 102), la liste (108) des coordonnées des points de départ et d'arrivée (100, 102) à la recherche de la dernière occurrence des mêmes coordonnées ou de coordonnées situées autour de grandeurs prédéfinies,
- au cours d'un troisième processus, un indice de sommet et un indice d'occurrence sont attribués à chaque point de départ ou d'arrivée (100, 102), l'indice de sommet étant un indice continu des sommets (107) et l'indice d'occurrence représentant un indice continu des points de départ et d'arrivée (100, 102) appartenant à un sommet (107), des points allant ensemble recevant le même indice de sommet de la part de la quantité de points de départ et d'arrivée (100, 102) et des points allant ensemble étant des points de la quantité de points de départ et d'arrivée (100, 102) qui présentent les mêmes coordonnées ou des coordonnées qui se trouvent autour de grandeurs prédéfinies.

2. Dispositif de calcul de pipeline (1) selon la revendication précédente, **caractérisé en ce que** le dispositif de calcul de pipeline (1) est conçu pour Intégrer, au cours d'un quatrième processus, les indices de sommet et d'occurrence de deux points de départ et d'arrivée (100, 102) en opposition par rapport aux extrémités d'une chaîne (105) dans une structure de sommet avec un indice de la chaîne reliée (105) .

3. Dispositif de calcul de pipeline (1) selon la revendication précédente, dans lequel le quatrième processus est **caractérisé par** une écriture pour la structure de sommet, dans laquelle tout d'abord au moins certaines des informations, de préférence toutes les informations pour un sommet (107) sont réunies par un processus de recherche et enregistrées dans un jeu de registres, avant que le sommet (107) ne soit intégré dans la structure de sommet et que les informations ne soient extraites de la quantité de chaînes (105) reliées à un sommet (107), et enregistrées.

4. Dispositif de calcul de pipeline (1) selon l'une des revendications 2 et 3, dans lequel le dispositif de calcul de pipeline (1) est conçu pour enregistrer, au cours du quatrième processus, des informations à partir de la quantité de chaînes (105) reliées à un sommet (107) sous la forme de la longueur des chaînes (105) et des points de départ et d'arrivée (100, 102) en opposition par rapport au sommet (107) des chaînes (105) dans la structure de sommet, le dispositif de calcul de pipeline (1) étant, en outre, conçu pour vérifier pour chaque sommet (107) si son indice de sommet est identique à l'indice de sommet du point de départ ou d'arrivée (100, 102) se trouvant en opposition et si la longueur de la chaîne associée (105) est inférieure à une valeur prédéfinie, au cas où ces conditions sont satisfaites, un rang du sommet (107) est décrémenté deux fois et une entrée de liste de la liaison avec l'indice de sommet identique et l'indice de sommet du point de départ ou d'arrivée (100, 102) en opposition est supprimée.

5. Dispositif de calcul de pipeline (1) selon l'une des revendications 2, 3 ou 4, dans lequel le dispositif de calcul de pipeline (1) est conçu pour enregistrer, au cours d'un quatrième processus, les informations de la quantité de chaînes (104) reliées à un sommet (107) sous la forme de la longueur des chaînes (105) et des points de départ ou d'arrivée (100, 102) se trouvant en opposition par rapport au sommet (107) des chaînes (105) dans la structure de sommet, le dispositif de calcul de pipeline (1) étant, en outre, conçu pour vérifier pour chaque sommet (107) si au moins deux des liaisons appartenant à un sommet (107) présentent le même indice de sommet du point de départ ou d'arrivée (100, 102) se trouvant en opposition ou s'il existe en plus du sommet (107) se trouvant en opposition une autre liaison dont l'indice de sommet est identique à l'indice de sommet se trouvant en opposition et si la longueur des chaînes (105) correspondant aux liaisons sont inférieures à une valeur prédéfinie, au cas où ces conditions sont satisfaites, une des deux entrées de liste des liaisons est supprimée ou les deux entrées sont supprimées et une nouvelle liaison est générée et intégrée, dans les deux cas le rang du sommet (107) est décrémenté une fois.

6. Dispositif de calcul de pipeline (1) selon l'une des revendications précédentes, dans lequel le dispositif de calcul de pipeline (1) présente deux mémoires RAM double port indépendantes (200, 210), le dispositif de calcul de pipeline (1) étant conçu
- pour enregistrer la liste (108), générée au cours du premier processus, de coordonnées de points de départ et d'arrivée (100, 102) de chaînes (105) dans une première mémoire RAM double port (200) et
- pour enregistrer, au cours du troisième processus, une liste (109) avec des indices de sommet et des indices d'occurrence dans la seconde mémoire RAM double port (210).

7. Dispositif de calcul de pipeline (1) selon l'une des revendications précédentes, dans lequel le dispositif de calcul de pipeline (1) est conçu pour ajouter à la liste (108) de coordonnées des points de départ et d'arrivée (100, 102), générée au cours du premier processus, une information de statut qui marque les points de départ et d'arrivée (100, 102) comme n'étant pas encore traités au cours du deuxième processus ; au cours du deuxième processus un pointeur est incrémenté sur les entrées de liste, jusqu'à ce qu'un point de départ ou d'arrivée (100, 102) marqué comme n'étant pas encore traité soit atteint, les coordonnées de ce point sont ensuite enregistrées dans un registre (202), et la liste (108) est ensuite parcourue à la recherche des points appartenant à ce point, les coordonnées enregistrées dans le registre (202) étant comparées avec les coordonnées des points de départ et d'arrivée (100, 102) de la liste (108).

8. Dispositif de calcul de pipeline (1) selon l'une des revendications précédentes, dans lequel le dispositif de calcul de pipeline (1) est conçu pour attribuer au moins un bit pour distinguer un point de départ (100) d'un point d'arrivée (102).

9. Dispositif de calcul de pipeline (1) selon l'une des revendications précédentes, **caractérisé en ce que** le dispositif de calcul de pipeline (1) présente, pour la réalisation du premier processus, deux registres montés en série (1490, 1491), à travers lesquels les points de contour (101) sont acheminés les uns à la suite des autres, ainsi que deux registres également montés en série (1492, 1493), à travers lesquels un marquage des segments de point de contour attribués aux points de contour (101) sont acheminés en parallèle, un décodeur (150) étant prévu, lequel compare le contenu des registres (1492, 1493) montés en série, à travers lesquels un marquage des segments de point de contour attribués aux points de contour (101) sont acheminés en parallèle, et ledit décodeur, en cas de différence entre les contenus des registres, marque en tant que points d'arrivée et de départ (102, 100) les points de contour (101) actuellement enregistrés dans les registres (1490, 1491), à travers lesquels les points de contour sont acheminés les uns à la suite des autres, de préférence en cas d'enregistrement dans la mémoire (200).

10. Dispositif de calcul de pipeline (1) selon l'une des revendications précédentes, **caractérisé par** un dispositif de calcul de pipeline disposé en amont du dispositif de calcul du premier processus, qui est conçu pour calculer des points de contour (101) à partir de données d'image et pour créer les points de contour (101) appartenant à un contour en tant que chaînes (105) sous la forme de données de listes, dans lesquelles les points de contour sont listés dans une suite ordonnée en fonction de leur séquence le long du contour.

11. Dispositif de calcul de pipeline (1) selon l'une des revendications précédentes, **caractérisé par** un double registre (211, 212), le dispositif de calcul de pipeline (1) étant conçu pour intégrer, au cours d'un troisième processus, dans le registre double (211, 212) d'un point de départ ou d'arrivée (100, 102) d'une chaîne (105) reliée à un sommet (107), une information comprenant une occurrence de sommet, les coordonnées, un numéro de segment, l'indice de sommet du point de départ ou d'arrivée (100, 102) et d'autres attributs, sur le point d'arrivée ou de départ (102, 100) en opposition, associé, de la chaîne (105).

12. Dispositif de calcul de pipeline (1) selon la revendication précédente, lequel est conçu pour enregistrer les sommets (107) avec leurs occurrences en échangeant des données et des adresses dans une mémoire RAM double port (210).

13. Procédé permettant de relier des éléments de contour à partir de données d'image au moyen d'au moins un dispositif de traitement de pipeline spécialement conçu à cet effet, qui
- au cours d'un premier processus, génère une liste (108) de coordonnées de points de départ et d'arrivée (100, 102) de chaînes (105), qui sont composées d'une quantité de points de contour (101) appartenant à un contour dans une suite ordonnée et qui les enregistre dans une mémoire,
- et, au cours d'un deuxième processus, pour chaque point de départ et d'arrivée (100, 102), parcourt la liste (108) des coordonnées des points de départ et d'arrivée (100, 102) à la recherche de la dernière occurrence des mêmes coordonnées ou de coordonnées situées autour de grandeurs prédéfinies,
- au cours d'un troisième processus, un indice de sommet et un indice d'occurrence sont attribués à chaque point de départ ou d'arrivée (100, 102), l'indice de sommet étant un indice continu des sommets (107) et l'indice d'occurrence représentant un indice continu des points de départ et d'arrivée (100, 102) appartenant à un sommet (107), et des points allant ensemble de la quantité de points de départ et d'arrivée (100, 102) recevant le même indice de sommet et des points allant ensemble sont des points de la quantité de points de départ et d'arrivée (100, 102) qui présentent les mêmes coordonnées ou des coordonnées qui se trouvent autour de grandeurs prédéfinies.

14. Procédé selon la revendication précédente, dans lequel, de manière continue, des chaînes (105) sont acheminées au premier processus et le premier, le deuxième et le troisième processus sont exécutés simultanément.

15. Procédé selon l'une des deux revendications précédentes, **caractérisé en ce qu'**au moins un bit est attribué et enregistré pour distinguer un point de départ (100) d'un point d'arrivée (102).
